# EUROPÄISCHE PATENTSCHRIFT

(11) **EP 0 902 343 B1**
(45) Veröffentlichungstag und Bekanntmachung des Hinweises auf die Patenterteilung: **23.03.2005**
(21) Anmeldenummer: 98115669.8
(22) Anmeldetag: 20.08.1998
(51) Int. Cl.: G05B 19/4093, G05B 19/4069

(54) **Verfahren und System zum Erstellen oder Visualisieren von Steuerdatensätzen**
Method and system for creating or displaying control instructions
Procédé et système de création ou d'affichage d'instructions de commande

(30) Priorität: 09.09.1997 DE 19739559
(43) Veröffentlichungstag der Anmeldung: 17.03.1999
(60) Teilanmeldung: 04011893.7
(73) Patentinhaber: Traub Drehmaschinen GmbH, 73262 Reichenbach (DE)
(72) Erfinder: Monz, Joachim, 73066 Uhingen (DE); Lachner, Armin, 73779 Deizisau (DE)
(74) Vertreter: HOEGER, STELLRECHT & PARTNER Patentanwälte

(56) Entgegenhaltungen:
- EP-A- 0 642 066
- EP-A- 0 642 067
- GB-A- 2 117 929
- US-A- 5 046 022
- US-A- 5 051 912
- US-A- 5 315 525

## Beschreibung

Die Erfindung betrifft zum Ersten ein Verfahren und ein System zum Erstellen oder Visualisieren eines mindestens eine Folge von Steuerdatensätzen aufweisenden Steuerprogramms für eine Werkzeugmaschine zur Bearbeitung eines Werkstücks auf dieser mittels von diesem Steuerprogramm gesteuerter Funktionseinheiten der Werkzeugmaschine.

Insbesondere dient das erfindungsgemäße Verfahren zum Erstellen von Steuerdatensätzen von Werkzeugmaschinen umfassend als Funktionseinheiten mehrere Bearbeitungseinheiten, wie Werkzeugträger, Bohrvorrichtungen, Stechschlitten und Werkstückaufnahmen, wobei die Funktionseinheiten jeweils mit mindestens einer Bewegungsachse ausgestattet sind und die Bewegungsachsen teilweise im Interpolationszusammenhang miteinander stehen und vorzugsweise von einer CNC-Steuerung angesteuert werden, die eines oder mehrere sogenannte Teilsysteme oder Kanäle aufweist. Bei derartigen komplexen Werkzeugmaschinen ist es erforderlich, durch sinnvolle funktionelle Zuordnung der verschiedenen Funktionseinheiten zu den einzelnen Teilsystemen oder Kanäle der CNC-Steuerung den Bearbeitungsablauf, insbesondere für eine Komplettfertigung eines Werkstücks, in einzelne, gleichzeitig oder teilweise gleichzeitig oder auch nacheinander ablaufende Bearbeitungsprozesse aufzuteilen, um somit die Stückzeiten für die Bearbeitung eines Werkstücks so gering wie möglich zu halten.

Dabei ist es insbesondere erforderlich, einerseits die Ansteuerung der Funktionseinheiten durch das jeweilige Teilsystem zu optimieren und andererseits auch die Arbeit der parallel arbeitenden Teilsysteme zueinander zu koordinieren.

Aus diesem Grund ist es erforderlich, um die Leistungsfähigkeit insbesondere derart komplexer Maschinen optimal zu nutzen, einen Benutzer durch ein leistungsfähiges Verfahren und ein leistungsfähiges Programmiersystem möglichst gut zu unterstützen.

Die US-A-5,046,022 offenbart die Steuerung eines Roboters, um ein Werkstück in verschiedenen Positionen zu positionieren, wobei Abbildungen realer Werkstücke und realer Funktionseinheiten zur Erzeugung des Steuerprogramms verwendet werden.

Somit können bei dieser bekannten Lösung die Steuerdatensätze nur dann erzeugt werden, wenn die Handhabungseinheit und das Werkstück als solche tatsächlich existieren, so daß die Möglichkeit besteht, dieselben mit der Kamera zu erfassen. Dies gilt insbesondere auch für eventuelle kollisionsbegründende Elemente, die nur dann erkannt werden können, wenn sie tatsächlich vorhanden sind.

Die Bedienungsperson muß die Aktionen für kollisionsfreie Bewegungen erst durch Ausprobieren und eigene "optische Kontrolle" am Bildschirm ermitteln.

Die GB-2 117 929 offenbart eine Steuerung für eine Werkzeugmaschine mit einer Simulationssteuerung zum Durchführen eines Simulationsprogramms.

Aus dem Stand der Technik sind ferner Programmiersysteme bekannt, die als "grafisch interaktive Programmiersysteme", "Autoprogrammiersysteme" oder als sogenannte "WOP-Systeme" bezeichnet werden und beispielsweise aus der EP-0 642 066 oder 0 642 067 bekannt sind.

All diese Verfahren und Systeme funktionieren prinzipiell so, daß dem Benutzer im Dialog mit der Datenverarbeitungseinrichtung Eingaben abverlangt werden, um ein Steuerprogramm für die Fertigung eines Werkstücks auf einer numerisch gesteuerten Werkzeugmaschine zu erzeugen, wobei die Ergebnisse der Eingaben grafisch auf einem Bildschirm zur Kontrolle angezeigt werden.

Das Grundkonzept dieser bekannten Verfahren und Systeme besteht jedoch darin, das Erstellen des Steuerprogramms stets durch gezielte Eingaben von steuerprogrammbezogenen Daten zur Steuerung der Funktionseinheiten über die diese Daten verarbeitender Maschinensteuerung im jeweils diesem zugeordneten Teilsystem vorzunehmen, wobei dann die Aktionen der Funktionseinheit entsprechend den einzelnen Steuerungsdaten erfolgen.

Aufgrund der "grafisch interaktiven Programmiersysteme" ist es zwar nicht mehr notwendig, unmittelbar Steuerdatensätze oder NC-Datensätze des Steuerprogramms einzugeben, da die "grafisch interaktiven Programmiersysteme" einfach verständliche Funktionsdialoge ermöglichen, dennoch sind die eingegebenen Daten nach wie vor steuerprogrammbezogen.

Der Erfindung liegt daher die Aufgabe zugrunde, den Benutzer bei der Erstellung des Steuerprogramms einer Werkzeugmaschine möglichst umfassend zu unterstützen.

Diese Aufgabe wird erfindungsgemäß durch Verfahren zum Erstellen eines mindestens eine Folge von Steuerdatensätzen aufweisenden Steuerprogramms für eine Werkzeugmaschine zur Bearbeitung eines Werkstücks auf dieser mittels von diesem Steuerprogramm gesteuerter Funktionseinheiten der Werkzeugmaschine gelöst, bei welchem zur Erstellung des Steuerprogramms von einer Datenverarbeitungseinrichtung ein virtuelles Werkstück und mindestens eine virtuelleFunktionseinheit für einen Benutzer dargestellt werden bei welchem, von dem Benutzer die einzelnen virtuellen Funktionseinheiten angesprochen und diesen virtuelle Aktionen mittels einer Dateneingabeeinrichtung vorgegeben werden und bei welchem die den einzelnen virtuellen Funktionseinheiten vorgegebenen Aktionen von der Datenverarbeitungseinrichtung unter Berücksichtigung einer dieser vorgegebenen Maschinen- und Steuerungskonfiguration selbsttätig in kollisionsfreie Aktionen erlaubende Steuerdatensätze des Steuerprogramms umgesetzt werden.

Der Vorteil der erfindungsgemäßen Lösung ist somit darin zu sehen, daß in diesem Fall der Benutzer ein Steuerprogramm dadurch erstellen kann, daß er lediglich die von den Funktionseinheiten durchzuführenden Aktionen, also werkstückbezogene Informationen, vorgibt, also den direkten Bearbeitungsablauf, und somit die direkte Einwirkung auf das Werkstück vorgeben kann, ohne hierbei die Maschinen und Steuerungskonfiguration zu kennen oder im Auge behalten zu müssen, da bei dem erfindungsgemäßen Verfahren ausgehend von den geforderten virtuellen Aktionen der virtuellen Funktionseinheiten bei der Erstellung der Steuerdatensätze für das Steuerprogramm die Datenverarbeitungseinrichtung selbsttätig die Maschinen- und Steuerungskonfiguration berücksichtigt.

Das heißt nichts anderes, als daß es für den Benutzer nicht mehr nötig ist, die Vorgaben für das Erstellen des Steuerprogramms unter Berücksichtigung der speziellen Maschinenund Steuerungskonfiguration durchzuführen, was voraussetzt, daß der Benutzer zu jedem Zeitpunkt die kinematischen Bedingungen der Maschine sowie die steuerungsinterne Zuordnung von Funktionseinheiten und deren Achsen zum entsprechenden Teilsystem der Maschinensteuerung und deren Abhängigkeit genau kennt. Es entfällt also die Notwendigkeit bei Erstellung beispielsweise eines Programmteils für die Steuerung einer Funktionseinheit "Bohreinrichtung" die Information dem richtigen Teilsystem der Maschinensteuerung zuzuordnen und außerdem zu berücksichtigen, daß die Aktionen dieser Funktionseinheit mit den Aktionen anderer Funktionseinheiten, die anderen Teilsystem zugeordnet sind, abgeglichen werden müssen, um Kollisionen zwischen Werkzeugen und Funktionseinheiten oder Werkzeugen untereinander bei der Durchführung der Bearbeitung zu verhindern.

Folglich wird von der erfindungsgemäßen Lösung die gesamte, in der Maschinen- und Steuerungskonfiguration steckende Komplexität vom Benutzer auf die Datenverarbeitungseinrichtung verlagert, so daß der Benutzer die Möglichkeit hat, sich ausschließlich auf die vorzugebenden virtuellen Aktionen und virtuellen Funktionseinheiten zu konzentrieren.

Besondere Vorteile treten dann noch auf, wenn ein Benutzer mit unterschiedlich konfigurierten Maschinen arbeiten muß, da er in diesem Falle auch von der besonderen Problematik entbunden ist, jeweils bei der Erstellung des Steuerprogramms unterschiedlicher Maschinen stets unterschiedliche Maschinenund Steuerungskonfigurationen im Auge zu behalten und diese unterschiedlichen Maschinen- und Steuerungskonfigurationen nicht zu verwechseln.

Prinzipiell ist es zur Realisierung des erfindungsgemäßen Verfahrens ausreichend, eine virtuelle Funktionseinheit und deren Aktionen darzustellen und dann jeweils dieser einen virtuellen Funktionseinheit die gewünschten Aktionen zuzuordnen.

Aus Gründen der Übersichtlichkeit und Vollständigkeit der Informationen für den Benutzer ist es jedoch besonders vorteilhaft, wenn für den Benutzer alle virtuellen Funktionseinheiten der Werkzeugmaschine entsprechend der aktuellen Maschinenkonfiguration in Form eines Maschinenbildes dargestellt werden, so daß der Benutzer stets die gesamte Werkzeugmaschine mit den zur Verfügung stehenden und gegebenenfalls in Aktion tretenden Funktionseinheiten beurteilen kann.

Prinzipiell wäre es für das erfindungsgemäße Verfahren ausreichend, die Funktionseinheiten darzustellen und die Aktionen derselben, beispielsweise durch Parameterangaben vorzugeben. Besonders vorteilhaft ist es jedoch, wenn für den Benutzer alle virtuellen Funktionseinheiten und deren virtuelle Aktionen unter Berücksichtigung der Maschinen- und Steuerungskonfiguration der Werkzeugmaschine dargestellt werden, so daß der Benutzer insbesondere die Möglichkeit hat, die Aktionen der Funktionseinheiten zu beurteilen und beispielsweise somit zu beurteilen, ob Funktionseinheiten bei den vorgegebenen Aktionen mit anderen Funktionseinheiten oder mit dem Werkstück oder mit anderen Teilen der Werkzeugmaschine kollidieren.

Prinzipiell wäre es möglich, das Darstellen der virtuellen Funktionseinheiten und deren virtuelle Aktionen in einem gesonderten Ablauf vorzusehen. Besonders vorteilhaft ist es jedoch für einen Benutzer, wenn die virtuellen Funktionseinheiten und deren virtuelle Aktionen nach Ansprache und Vorgabe derselben dargestellt werden, das heißt, daß der Benutzer die jeweilige Funktionseinheit anspricht, dieser die jeweilige virtuelle Aktion vorgibt und dann nach Beendigung der Vorgabe der virtuellen Aktion die Darstellung sowohl der virtuellen Funktionseinheit als auch der virtuellen Aktion für den Benutzer erfolgt, so daß er unmittelbar nach jeder Vorgabe einer virtuellen Aktion für eine angesprochene Funktionseinheit in der Lage ist, zu überprüfen, wie sich diese vorgegebene virtuelle Aktion tatsächlich auswirkt. Damit können insbesondere in einfacher Weise Fehleingaben und irrtümlich vorgegebene Aktionen vermieden werden.

Hinsichtlich der Art der Berücksichtigung der Maschinen- und Steuerungskonfiguration im Rahmen der erfindungsgemäßen Lösung wurden bislang keine näheren Angaben gemacht. Es gibt dabei unterschiedliche Arten, die Maschinen- und Steuerungskonfiguration zu berücksichtigen. Beispielsweise wäre es denkbar, die Maschinen- und Steuerungskonfiguration in Form eines bereits festgelegten Zusammenhangs vorzugeben. Eine besonders vorteilhafte Lösung sieht vor, daß von der Datenverarbeitungsvorrichtung eine Verknüpfung von definiert vorgegebenen virtuellen Funktionseinheiten zur Berücksichtigung der Maschinen- und Steuerungskonfiguration selbsttätig durchgeführt wird.

Das heißt, daß nicht eine definierte Vorgabe der Maschinenund Steuerungskonfiguration erfolgt, sondern daß entsprechend der erfindungsgemäßen Lösung nur definiert vorgegebene virtuelle Funktionseinheiten existieren, die zunächst ohne Verknüpfung vorliegen und daß dann entsprechend der Maschinen- und Steuerungskonfiguration von der Datenverarbeitungsvorrichtung selbsttätig eine Verknüpfung der definiert vorgegebenen virtuellen Funktionseinheiten durchgeführt wird.

Diese Lösung erhöht die Flexibilität des erfindungsgemäßen Verfahrens da allgemein eine bestimmte Anzahl von virtuellen Funktionseinheiten definiert vorgegeben werden kann und somit bei einer Anpassung des jeweiligen Verfahrens an eine unterschiedliche Maschinen- und Steuerungskonfiguration lediglich Informationen hinsichtlich der Verknüpfungen geändert werden müssen und die Datenverarbeitungsvorrichtung somit anhand der geänderten Informationen bezüglich der Verknüpfungen in der Lage ist, die stets definiert vorgegebenen virtuellen Funktionseinheiten entsprechend der geänderten Maschinen- und Steuerungskonfiguration in geänderter Art und Weise zu verknüpfen.

Damit kann das erfindungsgemäße Verfahren bei einer Vielzahl von Werkzeugmaschinen eingesetzt werden, wobei lediglich die Bedingung ist, daß die definiert vorgegebenen virtuellen Funktionseinheiten eine derartige Zahl aufweisen müssen, daß sämtliche gewünschten Maschinen- und Steuerungskonfigurationen durch Änderung der Verknüpfung zwischen denselben realisiert werden können.

Eine besonders zweckmäßige Art der Berücksichtigung der Maschinen- und Steuerungskonfiguration sieht vor, daß die Berücksichtigung der Maschinen- und Steuerungskonfiguration unter Zuhilfenahme eines Maschinenmodells durchgeführt wird, welches Informationen über die Maschinen- und Steuerungskonfiguration repräsentierende Verknüpfungen der virtuellen Funktionseinheiten umfaßt.

Ein derartiges Maschinenmodell stellt eine sehr einfache Datenstruktur dar, mit welcher die Maschinen- und Steuerungskonfiguration berücksichtigt werden kann.

Vorzugsweise ist dabei das Maschinenmodel so aufgebaut, daß es eine Grundkonfiguration der virtuellen Funktionseinheiten der Werkzeugmaschine umfaßt, welche vom Benutzer erweiterbar ist. Beispielsweise ist es hierbei denkbar, die Grundkonfiguration so zu gestalten, daß lediglich die vom Maschinenaufbau her festgelegten Verknüpfungen zwischen den virtuellen Funktionseinheiten Gegenstand der Grundkonfiguration sind, also beispielsweise Revolver und deren durch Schlitten festgelegte Achsbewegungen, während die einzelnen Stationen des Revolvers noch frei konfigurierbar sind und somit diesen einzelnen Stationen dann seitens des Benutzers Werkzeuge oder andere Bearbeitungseinrichtungen, wie beispielsweise auch Gegenspindeln etc., zugewiesen werden können. Damit ist einerseits sichergestellt, daß die vom Grundaufbau der Werkzeugmaschine her vorgegebenen Verknüpfungen vom Benutzer nicht selbst langwierig aufgebaut werden müssen, sondern bereits vorhanden sind, andererseits aber dem Benutzer alle Möglichkeiten gegeben sind, die vom Grundaufbau her vorhandene Maschine entsprechend dem jeweiligen Anwendungsfall noch im Detail, beispielsweise hinsichtlich der Werkzeuge, zu konfigurieren.

Besonders günstig ist es hierbei, wenn das Maschinenmodell mittels gespeicherter Verknüpfungsinformationen erstellt wird, so daß beispielsweise in einem Speicher entsprechend unterschiedlichen Werkzeugmaschinentypen unterschiedliche Verknüpfungsinformationen abgespeichert und dann entsprechend dem jeweiligen Werkzeugmaschinentyp aufgerufen werden können.

Vorzugsweise ist dabei vorgesehen, daß in der Datenverarbeitungseinrichtung das Maschinenmodell abgespeichert wird, welches die einzelnen virtuellen Funktionseinheiten der Werkzeugmaschine entsprechend der Maschinen- und Steuerungskonfiguration verknüpft, so daß dieses Maschinenmodell dann für die weitere Arbeitsweise des erfindungsgemäßen Verfahrens im komplett ergänzten Zustand vorliegt und nicht stets erneut aufgebaut werden muß.

Eine besonders günstige Lösung sieht dabei vor, daß in der Datenverarbeitungseinrichtung das Maschinenmodell in Form einer Datenbaumstruktur eingesetzt wird, da sich eine Datenbaumstruktur besonders gut für die Erfassung der Zusammenhänge einer Maschinen- und Steuerungskonfiguration eignet.

Zweckmäßigerweise ist dabei vorgesehen, daß die Datenbaumstruktur die Form einer hierarchischen Datenbaumstruktur hat, die dann jeweils entsprechend den unterschiedlichen Hierarchieebenen abgefragt werden kann.

Hinsichtlich der Art der Vorgabe der virtuellen Aktionen für die virtuellen Funktionseinheiten wurden im Zusammenhang mit der bisherigen Erläuterung der einzelnen erfindungsgemäßen Lösungen keine näheren Angaben gemacht. So wäre es beispielsweise denkbar, dem Benutzer die Möglichkeit zu geben, zu jeder angesprochenen virtuellen Funktionseinheit frei wählbare Bearbeitungsfunktionen vorzugeben. Hier besteht jedoch die Gefahr, daß der Benutzer Bearbeitungsfunktionen wählt, die mit der vorgegebenen virtuellen Funktionseinheit, also beispielsweise mit einem in einer Station eines Revolvers vorgesehenen Werkzeug, nicht realisiert werden können, beispielsweise weil sie zu einer Zerstörung des Werkzeugs führen würden oder einen unangemessenen Verschleiß desselben bedingen würden.

Aus diesem Grund sieht eine besonders bevorzugte Lösung des erfindungsgemäßen Verfahrens vor, daß von der Datenverarbeitungseinrichtung zu jeder virtuellen Funktionseinheit die mit dieser realisierbaren Bearbeitungsfunktionen selbsttätig ermittelt werden. Damit wird von vornherein ausgeschlossen, daß seitens des Benutzers Bearbeitungsfunktionen vorgegeben werden, die für die jeweilige virtuelle Funktionseinheit ungeeignet sind.

Diese Ermittlung der mit der jeweiligen virtuellen Funktionseinheit, also beispielsweise dem jeweiligen virtuellen Werkzeug, möglichen Bearbeitungsfunktionen kann nun auf unterschiedlichste Art und Weise erfolgen. Beispielsweise kann zu jeder virtuellen Funktionseinheit in einer Tabelle die Zahl der realisierbaren Bearbeitungsfunktionen niedergelegt werden. Dies erfordert jedoch viel Speicherplatz. Aus diesem Grund ist vorzugsweise vorgesehen, daß für die Ermittlung der realisierbaren Bearbeitungsfunktion ein Filterdatensatz erstellt wird, welcher es ermöglicht, aus einer Vielzahl von Bearbeitungsfunktionen die geeigneten auszufiltern.

Auch der Filterdatensatz kann dabei durch Ablegen in einer Tabelle vorgegeben werden. Noch vorteilhafter ist es jedoch, wenn der Filterdatensatz aufgrund der Maschinen- und Steuerungskonfiguration erstellt wird und somit jeweils die konkret vorliegende Maschinen- und Steuerungskonfiguration repräsentiert.

Hierbei wäre es denkbar, dem Benutzer das Erstellen des Filterdatensatzes zu überlassen. Noch vorteilhafter ist es jedoch wenn von der Datenverarbeitungseinrichtung der Filterdatensatz entsprechend der Maschinen- und Steuerungskonfiguration selbsttätig ermittelt wird, so daß stets sichergestellt ist, daß der Filterdatensatz entsprechend der Maschinen- und Steuerungskonfiguration aufgebaut ist.

Zur Ermittlung der nunmehr möglichen Bearbeitungsfunktionen ist vorzugsweise vorgesehen, daß mit dem Filterdatensatz aus einer Liste sämtlicher möglicher Bearbeitungsfunktionen eine Liste von mit der jeweiligen virtuellen Funktionseinheit ausführbaren Bearbeitungsfunktionen selektiert wird.

Um nun dem Benutzer die Möglichkeit zu geben, von den mit der jeweiligen virtuellen Funktionseinheit ausführbaren Bearbeitungsfunktionen die gewünschte in einfacher Art und Weise auswählen, ist vorzugsweise vorgesehen, daß die Liste mit den der jeweiligen virtuellen Funktionseinheit zugeordneten Bearbeitungsfunktionen für einen Benutzer anwählbar präsentiert wird, das heißt, daß die Liste so präsentiert wird, daß der Benutzer direkt die jeweils gewünschte Bearbeitungsfunktion anwählen kann und bereits durch das Anwählen eine Übernahme der Bearbeitungsfunktion erfolgt.

Ein besonderer Komfort ist für den Benutzer dann gegeben, wenn von der Datenverarbeitungseinrichtung aufgrund der angesprochenen virtuellen Funktionseinheit und der entsprechend angewählten virtuellen Bearbeitungsfunktion die Steuerdatensätze für das Steuerprogramm selbsttätig ermittelt werden und somit die Eingaben des Benutzers sich darauf beschränken, einerseits die Funktionseinheit anzuwählen und dann aus der Möglichkeit der präsentierten virtuellen Bearbeitungsfunktionen die Gewünschte anzuwählen.

Im Zusammenhang mit der bislang beschriebenen Lösung wurde lediglich davon ausgegangen, daß die virtuellen Funktionseinheiten und deren virtuelle Aktionen dargestellt werden. Dies ist prinzipiell ausreichend, um dem Benutzer aufzuzeigen, ob die Eingaben vernünftig und für den jeweiligen Fall zutreffend sind. Besonders günstig ist es jedoch, wenn die Formänderung eines virtuellen Werkstücks durch Bearbeitung desselben mittels virtueller Aktionen der virtuellen Funktionseinheiten dargestellt wird. Diese zusätzliche Darstellung der Form des Werkzeugs macht es für den Benutzer noch deutlicher, ob die Eingaben seinen Vorstellungen entsprechen.

Es gibt verschiedene Möglichkeiten, die Formänderungen darzustellen. Besonders günstig ist es, wenn die Formänderung des virtuellen Werkstücks durch eine Schnittberechnung ermittelt wird, das heißt es wird direkt berechnet, welche Auswirkungen die jeweiligen virtuellen Aktionen der virtuellen Funktionseinheiten haben, wobei unter einer Schnittberechnung die Berechnung der Auswirkung von jeglicher Art von Materialabtrag zu verstehen ist, eine zerspanende schleifende oder auch beispielsweise in anderer Weise materialabtragende Einwirkung, wie beispielsweise Laserbearbeitung oder ähnliches.

Um außerdem dem Benutzer die Möglichkeit zu geben, das erstellte Steuerprogramm nochmals im Ganzen oder auch in Teilen überprüfen zu können, ist vorgesehen, daß von der Datenverarbeitungseinrichtung die Steuerdatensätze des Steuerprogramms in derselben Weise dekodiert und interpoliert werden, wie in einem Dekoder und Interpolator der Maschinensteuerung für die Funktionseinheiten der Werkzeugmaschine. Damit ist die Möglichkeit eröffnet, das Steuerprogramm unter den Bedingungen zu überprüfen, unter denen es dann später zum Bearbeiten des Werkstücks auf der Werkzeugmaschine läuft.

In diesem Fall ist - um die Auswirkungen der einzelnen Steuerdatensätze visualisieren zu können - vorgesehen, daß bei der Interpolation unter Heranziehung der Maschinen- und Steuerungskonfiguration die virtuellen Aktionen der virtuellen Funktionseinheiten ermittelt und dargestellt werden, so daß die Möglichkeit besteht, den exakten Ablauf - allerdings in der Regel mit Zeitverzögerung - darzustellen, wie er sich auch in der Werkzeugmaschine dann ergibt.

Besonders günstig ist es hierbei, wenn bei der Interpolation zur Ermittlung der virtuellen Aktionen das Maschinenmodell herangezogen wird, das vorzugsweise dann für einen die Interpolation durchführenden Interpolator eine "virtuelle Werkzeugmaschine" simuliert.

Besonders günstig ist es hierbei zur Überprüfung des Steuerprogramms, wenn an dem virtuellen Werkstück die Bearbeitung desselben zu jedem Zeitpunkt dargestellt wird, so daß der Benutzer Schritt für Schritt überprüfen kann, wie sich die vorgegebenen virtuellen Aktionen dann auf das Werkstück selbst auswirken.

Im Zusammenhang mit der Beschreibung der unterschiedlichsten Ausführungsformen der erfindungsgemäßen Lösung wurde nicht im einzelnen darauf eingegangen, in welcher Art und Weise eine Darstellung der virtuellen Aktionen der virtuellen Funktionseinheiten erfolgen soll. Die einfachste Möglichkeit wäre die, die virtuellen Aktionen der virtuellen Funktionseinheiten in einer für eine Bearbeitung des virtuellen Werkstücks vorgesehenen Bearbeitungsabfolge zu visualisieren, da dies dem normalen Ablauf des Steuerprogramms und der normalen Bearbeitung der Steuerdatensätze entspricht.

Eine besonders günstige Lösung sieht jedoch vor, daß die virtuellen Aktionen der virtuellen Funktionseinheiten in einer für eine Bearbeitung des virtuellen Werkstücks vorgesehenen Bearbeitungsabfolge oder in umgekehrter Bearbeitungsabfolge visualisiert werden, so daß also der Benutzer nicht nur die Möglichkeit hat, das gesamte Steuerprogramm in der Bearbeitungsabfolge zu überprüfen und zu verfolgen, sondern insbesondere zur Überprüfung von kritischen Programmbereichen oder Bewegungen der Funktionseinheiten dergestalt, daß zum Beispiel leicht Kollisionen auftreten können, das Steuerprogramm auch in umgekehrter Bearbeitungsabfolge zu überprüfen.

Hierzu sind die unterschiedlichsten Möglichkeiten denkbar. Es wäre beispielsweise denkbar, bei einer Visualisierung des Steuerprogramms in Bearbeitungsabfolge bei der Interpolation einen Datensatz zu erstellen, der Punkt für Punkt die Bewegung beispielsweise eines Werkzeugs festhält und dann diesen gesamten Datensatz zu speichern, um mit diesem dann die Möglichkeit zu haben, auch die Bewegung der Funktionseinheit, also beispielsweise des Werkzeugs, in umgekehrter Bearbeitungsabfolge für den Benutzer zu visualisieren.

Diese Lösung benötigt jedoch einen hohen Aufwand an Rechenzeit und sehr viel Speicherplatz. Insbesondere benötigt diese Lösung dann einen großen Aufwand, wenn ein gesamtes Steuerprogramm in umgekehrter Bearbeitungsabfolge visualisiert werden soll.

Aus diesem Grund sieht eine besonders günstige Lösung vor, daß zusätzlich zu den Steuerdatensätzen unter Berücksichtigung der Werkzeugmaschinen- und Steuerkonfiguration zu jedem Steuerdatensatz Hilfsdaten erzeugt werden, welche ein Visualisieren der virtuellen Aktionen in umgekehrter Bearbeitungsabfolge erlauben. Diese Hilfsdaten werden dabei derart generiert, daß sie lediglich den Steuerdatensatz dahingehend ergänzen, daß es möglich ist, den Steuerdatensatz in umgekehrter Bearbeitungsabfolge zu durchlaufen, das heißt, daß als Hilfsdaten all diejenigen Daten generiert werden, die nicht explizit Teil des Steuerdatensatzes sind und sich aus der Abarbeitung aufeinanderfolgender Steuerdatensätze in Bearbeitungsabfolge zwangsläufig ergeben, jedoch ein Invertieren der Bearbeitungsabfolge aufgrund ihres Fehlens unmöglich machen.

Diese Hilfsdaten können in unterschiedlichster Art und Weise generiert und abgespeichert werden. Eine besonders vorteilhafte Lösung sieht vor, daß jedem Steuerdatensatz die Hilfsdaten in Form eines Hilfsdatensatzes zugeordnet werden, so daß zu jedem Steuerdatensatz die zugeordneten Hilfsdaten als eindeutig abgegrenzter Hilfsdatensatz existieren.

Um diese Hilfsdatensätze mit möglichst wenig Daten versehen zu müssen und andererseits auch ihre Zuordnung zu den jeweiligen Steuerdatensätzen eindeutig zu gestalten, ist vorzugsweise vorgesehen, daß die Hilfsdatensätze in einer verketteten Liste abgespeichert werden und daß sich dann aus dieser verketteten Liste der Hilfsdatensätze sämtliche Hilfsdaten für ein Durchlaufen des Steuerprogramms in umgekehrter Bearbeitungsabfolge entnehmen lassen.

Als Hilfsdatensatz können die unterschiedlichsten Daten niedergelegt werden. Eine besonders günstige Möglichkeit sieht vor, daß der Hilfsdatensatz einen Übergangs- und/oder Zustandsdatensatz umfaßt. Dabei werden erfindungsgemäß nur Übergangsdaten oder nur Zustandsdaten mit dem Hilfsdatensatz aufgenommen, wenn diese ausreichend sind. Nur wenn es erforderlich ist sowohl Übergangs- als auch Zustandsdaten in den Hilfsdatensatz aufzunehmen, werden beide Art von Daten aufgenommen.

Um gleichzeitig auch die Formänderungen des Werkstücks in einfacher Weise zu erfassen und insbesondere dann auch in möglichst einfacher Weise ein Durchlaufen des Steuerprogramms in umgekehrter Bearbeitungsabfolge zu realisieren ist vorzugsweise vorgesehen, daß zu jedem Steuerdatensatz Formdaten des virtuellen Werkstücks ermittelt werden und diese Formdaten dann ebenfalls abgespeichert werden, um beispielsweise bei einem Abarbeiten des Steuerprogramms in umgekehrter Bearbeitungsabfolge aus dem bearbeiteten Werkstück optisch das unbearbeitete Werkstück entstehen zu lassen.

Diese Formdaten des Werkstücks sind dabei ebenfalls abzuspeichern. Eine besonders günstige Möglichkeit sieht vor, daß die Formdaten im Hilfsdatensatz abgelegt werden, so daß sich aus dem Hilfsdatensatz dann gleichzeitig auch noch die Formänderung des Werkstücks ermitteln läßt.

Eine besonders günstige Lösung des erfindungsgemäßen Verfahrens sieht dabei vor, daß sowohl auf das Steuerprogramm als auch auf die verkettete Liste zugegriffen und zu jedem Steuerdatensatz der entsprechende Hilfsdatensatz aus der verketteten Liste ausgelesen wird, so daß bei der Abarbeitung des Steuerprogramms stets sowohl der Steuerdatensatz als auch der Hilfsdatensatz vorliegt und zur Visualisierung der virtuellen Aktion der virtuellen Funktionseinheiten insbesondere im Zusammenhang mit der Bearbeitung des virtuellen Werkstücks herangezogen werden können.

Dabei ist es besonders günstig, wenn von der Datenverarbeitungseinrichtung sowohl der abzuarbeitende Steuerdatensatz als auch der zugeordnete Hilfsdatensatz gleichzeitig erfaßt werden, so daß beide Datensätze der Datenverarbeitungseinrichtung vorliegen.

Besonders günstig zum gleichzeitigen Erfassen des Steuerdatensatzes und des Hilfsdatensatzes ist es, wenn die verkettete Liste abgespeichert und jedem Steuerdatensatz ein Hilfsdatensatz eindeutig zugeordnet wird.

Eine besonders bevorzugte Lösung, bei welcher die virtuellen Aktionen der virtuellen Funktionseinheiten dargestellt werden können, sieht vor, daß mit der Datenverarbeitungseinrichtung Steuerdatensätze und Hilfsdaten in Bearbeitungsabfolge oder in umgekehrter Bearbeitungsabfolge erfaßt und durch die virtuellen Funktionseinheiten und virtuellen Aktionen dargestellt werden, das heißt, daß bei dieser Lösung die Möglichkeit besteht, die Steuerdatensätze in umgekehrter Bearbeitungsabfolge abzuarbeiten und gleichzeitig die entsprechenden Hilfsdatensätze zu erfassen und somit mit beiden zusammen auch in umgekehrter Bearbeitungsabfolge sämtliche virtuellen Aktionen der virtuellen Funktionseinheiten vollständig darzustellen.

Die eingangs genannte Aufgabe wird aber auch durch ein Programmiersystem zur Erzeugung eines Steuerprogramms für eine Werkzeugmaschine gelöst, welches zur Bearbeitung eines Werkstücks mittels von diesem Steuerprogramm gesteuerter Funktionseinheiten der Werkzeugmaschine dient, umfassend eine Dateneingabeeinrichtung zum Eingeben und/oder Ändern von Informationen, die das Steuerprogramm der Werkzeugmaschine bestimmen, eine Visualisierungseinrichtung zum Darstellen der Informationen und eine Datenverarbeitungseinrichtung, die die Informationen in das Steuerprogramm bestimmende Steuerdatensätze umsetzt und in einem Programmspeicher abspeichert, wobei die Datenverarbeitungseinrichtung eine Modell-Visualisierungs-Einheit umfaßt, welche so ausgebildet ist, daß mit dieser mindestens eine virtuelle Funktionseinheit der Werkzeugmaschine und deren virtuelle Aktionen mittels der Visualisierungseinrichtung darstellbar sind, wobei die Modell-Visualisierungs-Einheit so mit der Dateneingabeeinrichtung zusammenwirkt, daß die virtuellen Funktionseinheiten über die Dateneingabeeinrichtung ansprechbar sind und diesen virtuellen Funktionseinheiten virtuelle Aktionen vorgebbar sind, und wobei mit der Modell-Visualisierungs-Einheit die den einzelnen virtuellen Funktionseinheiten vorgegebenen virtuellen Aktionen unter Berücksichtigung der Maschinen- und Steuerungskonfiguration in kollisionsfreie Aktionen erlaubende Steuerdatensätze des Steuerprogramms umsetzbar sind.

Der Vorteil des erfindungsgemäßen Programmiersystems zeigt sich in der gleichen Art und Weise wie bei dem erfindungsgemäßen Verfahren, so daß hierauf in vollem Umfang Bezug genommen wird.

Ferner ergeben sich zu dem erfindungsgemäßen Programmiersystem die gleichen vorteilhaften Ausführungsbeispiele, wie sie im Zusammenhang mit dem erfindungsgemäßen Verfahren bereits vorstehend bereits im einzelnen gemeinsam mit den jeweiligen Vorteilen beschrieben sind, so daß auch hierauf vollinhaltlich Bezug genommen wird.

Bei einem Verfahren zum Visualisieren eines Steuerprogramms einer Werkzeugmaschine ist vorgesehen, daß mit einer Datenverarbeitungseinrichtung Steuerdatensätze aus dem Steuerprogramm ausgelesen werden, unter Berücksichtigung der Maschinen- und Steuerungskonfiguration virtuelle Funktionseinheiten, deren Verknüpfungen und deren virtuelle Aktionen selbsttätig ermittelt und dann in Form eines Maschinenbildes die virtuellen Funktionseinheiten und deren virtuelle Aktionen für einen Benutzer dargestellt werden.

Dieses Verfahren hat den großen Vorteil, daß sie eine einfache Lösung zur Verfügung stellt, mit welcher ein Steuerprogramm überprüft werden kann, wobei diese Lösung nicht auf eine einzige Werkzeugmaschine beschränkt ist, sondern aufgrund der Tatsache, daß die Maschinen- und Steuerungskonfiguration berücksichtigt wird, die Überprüfung für unterschiedlich konfigurierte Werkzeugmaschinen erfolgen kann, so daß sich das erfindungsgemäße Verfahren bei einer Vielzahl von Werkzeugmaschinen einsetzen läßt und beispielsweise mit einem Arbeitsplatzrechner eine Vielzahl von Steuerprogrammen für eine Vielzahl von Werkzeugmaschinen überprüft werden kann.

Darüber hinaus hat die erfindungsgemäße Lösung auch den großen Vorteil, daß für die Überprüfung des Steuerprogramms durch den Benutzer die Kenntnis der spezifischen Maschinen- und Steuerungskonfiguration gar nicht notwendig ist, da diese bei der Ermittlung der virtuellen Aktion der virtuellen Funktionseinheiten automatisch berücksichtigt wird und somit lediglich die virtuellen Aktionen der virtuellen Funktionseinheiten dargestellt und seitens des Benutzers überprüft werden, so daß sich der Benutzer auf die tatsächlichen werkstückbezogenen Vorgänge, die von dem Steuerprogramm im Zusammenhang mit einer Werkzeugmaschine ausgelöst werden konzentrieren kann.

Besonders günstig ist es dabei, wenn eine Verknüpfung der virtuellen Funktionseinheiten zur Berücksichtigung der Maschinen- und Steuerungskonfiguration von der Datenverarbeitungseinrichtung aufgrund einer festgelegten Modellkonfiguration selbsttätig durchgeführt werden wird, das heißt, das vorzugsweise virtuelle Funktionseinheiten der Datenverarbeitungseinrichtung definiert vorgegeben sind und je nach unterschiedlicher Maschinen- und Steuerungskonfiguration eine unterschiedliche Verknüpfung der virtuellen Funktionseinheiten entsprechend der Modellkonfiguration durchgeführt wird, ohne daß der Benutzer hierauf Einfluß zu nehmen hat.

Dabei ist es besonders zweckmäßig, wenn die Berücksichtigung der Maschinen- und Steuerungskonfiguration unter Zuhilfenahme eines Maschinenmodells durchgeführt wird, welches Informationen über die Maschinen- und Steuerungskonfiguration repräsentierende Verknüpfungen der virtuellen Funktionseinheiten umfaßt. Dieses Maschinenmodell stellt eine möglichst einfache und zweckmäßige Datenkonfiguration dar.

Vorteilhaft ist es dabei, wenn das Maschinenmodell mittels gespeicherter Verknüpfungsinformationen erstellt wird.

Besonders zweckmäßig ist es dabei, wenn in der Datenverarbeitungseinrichtung das Maschinenmodell abgespeichert wird, welches die einzelnen virtuellen Funktionseinheiten der Werkzeugmaschine entsprechend der Maschinen- und Steuerungskonfiguration verknüpft, so daß mittels dieses Maschinenmodells stets sämtliche Verknüpfungen abfragbar zur Verfügung stehen.

Hierbei ist es günstig, wenn in der Datenverarbeitungseinrichtung das Maschinenmodell in Form einer Datenbaumstruktur eingesetzt wird, wobei diese Datenbaumstruktur vorteilhafterweise die Form einer hierarchischen Datenbaumstruktur aufweist. Das Abspeichern des Maschinenmodells in Form einer derartigen Struktur hat den Vorteil, daß sich mit dieser in einfacher Weise die Maschinen- und Steuerungskonfiguration darstellen und auch für die Visualisierung günstig einsetzen läßt.

Im Zusammenhang mit der bisherigen Beschreibung der erfindungsgemäßen Lösung wurde lediglich davon ausgegangen, daß die virtuellen Funktionseinheiten und deren virtuelle Aktionen dargestellt werden. Besonders günstig ist es im Rahmen der erfindungsgemäßen Lösung, wenn zusätzlich die Formänderung eines virtuellen Werkstücks durch Bearbeitung desselben mittels der virtuellen Aktionen der virtuellen Funktionseinheiten dargestellt wird, so daß für den Benutzer sämtliche Informationen visualisiert werden, die dieser benötigt, um das Steuerprogramm zu beurteilen.

Die Formänderung des virtuellen Werkstücks kann in unterschiedlichster Weise erfaßt werden. Beispielsweise wäre es denkbar, von Beginn des Steuerprogramms an die Änderung der Form des Werkstücks Punkt für Punkt aufzunehmen und zu speichern. Besonders günstig ist es jedoch, wenn die Formänderung des virtuellen Werkstücks durch eine Schnittberechnung ermittelt wird.

Um insbesondere im Rahmen des erfindungsgemäßen Verfahrens die gleichen Verhältnisse vorliegen zu haben, wie sie nachher bei dem Ablauf des Steuerprogramms in einer Werkzeugmaschine vorliegen, ist vorzugsweise vorgesehen, daß in der Datenverarbeitungseinrichtung die Steuerdatensätze des Steuerprogramms in derselben Weise dekodiert und interpoliert werden wie in einem Dekoder und einem Interpolator der Maschinensteuerung für die Funktionseinheiten der Werkzeugmaschine.

In diesem Fall ist es zur Erstellung des Maschinenbildes zweckmäßig, wenn bei der Interpolation unter Heranziehung der Maschinen- und Steuerungskonfiguration die virtuellen Aktionen der virtuellen Funktionseinheiten ermittelt und dargestellt werden, so daß für die Interpolation eine sogenannte virtuelle Werkzeugmaschine zur Verfügung steht, anhand von welcher sich dann die virtuellen Aktionen der virtuellen Funktionseinheiten ergeben.

Eine besonders günstige Vorgehensweise sieht vor, daß bei der Interpolation zur Ermittlung der virtuellen Aktion das Maschinenmodell herangezogen wird, da dieses in besonders einfacher Weise die Maschinen- und Steuerungskonfiguration repräsentiert.

Um dem Benutzer zu jedem Zeitpunkt die Informationen über das Aussehen des Werkstücks zu vermitteln, ist vorzugsweise vorgesehen, daß an dem virtuellen Werkstück die Bearbeitung desselben zu jedem Zeitpunkt dargestellt wird.

Damit die Überprüfung des Steuerprogramms für den Benutzer besonders komfortabel ist, insbesondere um diesem die Möglichkeit zu eröffnen, schwierige Teile des Steuerprogramms exakt zu überprüfen, beispielsweise daraufhin zu überprüfen, ob Kollisionen der Funktionseinheiten auftreten oder Kollisionen der Funktionseinheiten mit anderen Teilen der Werkzeugmaschine, ist bei dem erfindungsgemäßen Verfahren vorzugsweise vorgesehen, daß die virtuellen Aktionen der virtuellen Funktionseinheiten in einer für eine Bearbeitung des virtuellen Werkstücks vorgesehenen Bearbeitungsabfolge oder in umgekehrter Bearbeitungsabfolge visualisiert werden, das heißt, daß der Benutzer nicht nur die Möglichkeit hat, das Steuerprogramm in der Bearbeitungsabfolge zu überprüfen, sondern an den ihn interessierenden Passagen oder auch generell das gesamte Steuerprogramm in umgekehrter Bearbeitungsabfolge ablaufen zu lassen, um sämtliche möglicherweise auftretenden Probleme desselben zu erkennen.

Zur Darstellung der virtuellen Aktion in umgekehrter Bearbeitungsabfolge wäre es beispielsweise möglich, bei einem Durchlauf des Steuerprogramms in Bearbeitungsabfolge Punkt für Punkt sämtliche Bewegungen der Funktionseinheiten aufzunehmen, abzuspeichern und dann wieder in umgekehrter Bearbeitungsabfolge darzustellen. Dies ist jedoch aufwendig, benötigt einen hohen Rechenaufwand und eine hohe Speicherkapazität. Aus diesem Grund ist vorzugsweise vorgesehen, daß zusätzlich zu den Steuerdatensätzen unter Berücksichtigung der Werkzeugmaschinen- und Steuerungskonfiguration zu jedem Steuerdatensatz Hilfsdaten erzeugt werden, welche ein Visualisieren der virtuellen Aktion in umgekehrter Bearbeitungsabfolge erlauben. Diese Hilfsdaten sind dabei auf diejenigen Daten beschränkt, die ergänzend zu den Steuerdatensätzen erforderlich sind, um die Steuerdatensätze in umgekehrter Bearbeitungsabfolge zu visualisieren.

Die Hilfsdaten können dabei in beliebiger Weise erzeugt und abgespeichert werden. Besonders günstig ist es jedoch, wenn zu jedem Steuerdatensatz Hilfsdaten in Form eines Hilfsdatensatzes zugeordnet werden, so daß die Ergänzung jedes Steuerdatensatzes durch den Hilfsdatensatz erfolgt.

Die Menge der Hilfsdaten läßt sich insbesondere auch dann reduzieren, wenn die Hilfsdatensätze in einer verketteten Liste abgespeichert werden, so daß jeder Hilfsdatensatz mit dem vorangehenden und nachfolgenden Hilfsdatensatz zusammenhängend interpretierbar ist.

Hinsichtlich der Art der verwendeten Hilfsdaten ist es besonders günstig, wenn der Hilfsdatensatz ein Übergangsund/oder Zustandsdatensatz umfaßt, da mit diesen Datensätzen die minimale Menge von Hilfsdaten abgespeichert werden muß.

Wenn zu der Darstellung der virtuellen Funktionseinheiten und der virtuellen Aktionen auch noch die Darstellung des virtuellen Werkstücks hinzukommen soll und insbesondere wenn die Darstellung der Formänderungen des virtuellen Werkzeugs auch in umgekehrter Bearbeitungsabfolge realisierbar sein soll, ist es erforderlich, die Daten hinsichtlich der Formänderung des Werkstücks zu erfassen. Beispielsweise wäre es denkbar, die Daten der Formänderung des Werkstücks Punkt für Punkt zu erfassen, was allerdings einen hohen Rechenaufwand und eine hohe Speicherkapazität erfordert. Aus diesem Grund ist es günstig, wenn zu jedem Steuerdatensatz Formdaten des virtuellen Werkstücks ermittelt werden. Das heißt, daß in diesem Fall dem Steuerdatensatz die Formdaten des virtuellen Werkstücks jeweils zugeordnet werden.

Zur Abspeicherung dieser Formdaten hat es sich als besonders vorteilhaft erwiesen, wenn die Formdaten im Hilfsdatensatz abgelegt werden, so daß der Hilfsdatensatz auch noch die Formdaten des Werkstücks umfaßt und somit der Hilfsdatensatz die komplette Information liefert, die zusätzlich zum Steuerdatensatz erforderlich ist, um die virtuellen Funktionseinheiten, deren virtuelle Aktionen und die Formänderungen des virtuellen Werkstücks in umgekehrter Bearbeitungsabfolge darstellen zu können.

Zum Auffinden der Daten beim Darstellen eines Steuerprogramms in umgekehrter Bearbeitungsabfolge hat es sich als besonders zweckmäßig erwiesen, wenn sowohl auf das Steuerprogramm als auch auf die verkettete Liste zugegriffen und zu jedem Steuerdatensatz der entsprechende Hilfsdatensatz aus der verketteten Liste ausgelesen wird, so daß die erforderlichen Informationen für die Darstellung des Steuerprogramms in umgekehrter Bearbeitungsabfolge mit dem Steuerdatensatz im Zusammenhang erfaßbar sind. Eine besonders günstige Lösung sieht vor, daß von der Datenverarbeitungseinrichtung sowohl der abzuarbeitende Steuerdatensatz als auch der zugeordnete Hilfsdatensatz gleichzeitig bestimmt wird und somit beide Daten gleichzeitig vorliegen.

Die Verwendung von Steuerdatensätzen und entsprechenden Hilfsdaten macht es möglich, das mit der Datenverarbeitungseinrichtung Steuerdatensätze und Hilfsdaten in Bearbeitungsabfolge oder in umgekehrter Bearbeitungsabfolge erfaßt und durch die virtuellen Funktionseinheiten und virtuellen Aktionen dargestellt werden.

Bei einem System zum Visualisieren eines Steuerprogramms einer Werkzeugmaschine umfassend eine Datenverarbeitungseinrichtung und eine Visualisierungseinrichtung ist vorgesehen, daß die Datenverarbeitungseinrichtung eine Modell-Visualisierungs-Einheit umfaßt, mit welcher Steuerdatensätze aus dem Steuerprogramm auslesbar sind, unter Berücksichtigung der Maschinenund Steuerungskonfigurationen virtuelle Funktionseinheiten, deren Verknüpfung und deren virtuelle Aktionen selbständig ermittelbar und dann in Form eines Maschinenbildes die virtuellen Funktionseinheiten und deren virtuelle Aktionen für einen Benutzer darstellbar sind.

Die Vorteile dieses Systems sind dieselben, wie sie im Zusammenhang mit dem vorstehend genannten Verfahren beschrieben wurden.

Ferner wird auch hinsichtlich vorteilhafter Weiterbildungen dieses Systems auf entsprechend den Ausführungen zu den vorteilhaften Weiterbildungen des vorstehend genannten Verfahrens sowie der Ausführungen zu den einzelnen Ausführungsformen des eingangs beschriebenen Verfahrens und Programmiersystems zum Erstellen eines Steuerprogramms vollinhaltlich Bezug genommen.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig.1: eine schematische Darstellung eines erfindungsgemäßen Systems mit den erforderlichen Einrichtungen;
- Fig. 2: eine erste Einsatzmöglichkeit des erfindungsgemäßen Systems;
- Fig. 3: eine zweite Einsatzmöglichkeit des erfindungsgemäßen Systems;
- Fig. 4: eine strukturierte Darstellung von von der Datenverarbeitungseinrichtung des erfindungsgemäßen Systems umfaßten Einheiten und Speichern in Blockstruktur;
- Fig. 5: eine Darstellung einzelner Funktionsblöcke einer Modell-Visualisierungs-Einheit gemäß Fig. 4 sowie deren Zusammenwirken mit den übrigen Einheiten und Speichern;
- Fig. 6: ein Ablaufdiagramm von beispielhaft ausgewählten Abläufen in der in Fig. 5 dargestellten Modell-Visualisierungs-Einheit;
- Fig. 7: ein Ablaufdiagramm für eine Erstellung eines Filterdatensatzes in einer in Fig. 4 dargestellten Modellkonfigurationseinheit und
- Fig. 8: ein Ablaufdiagramm für Erstellung einer Liste möglicher Bearbeitungsfunktionen in einer Funktionszuordnungseinheit gemäß Fig. 4.

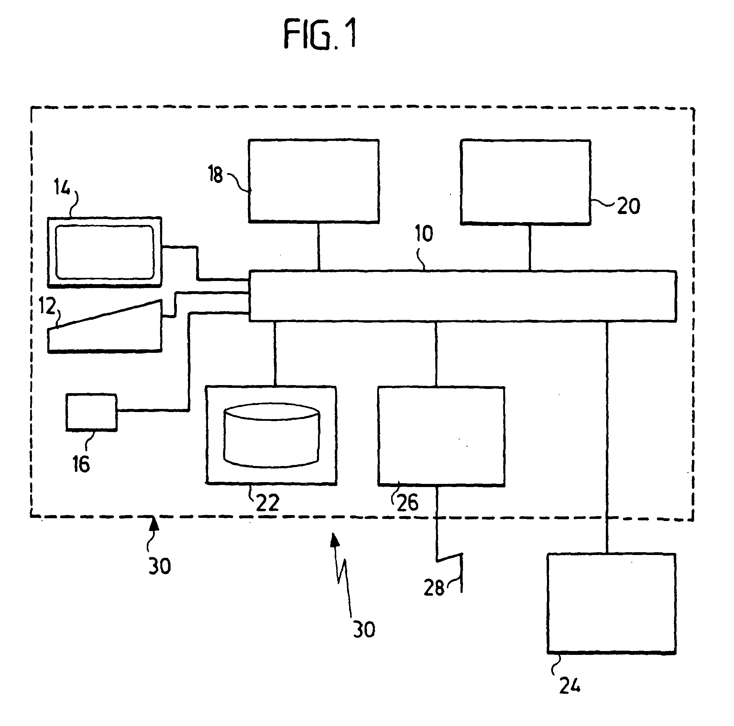

Ein Ausführungsbeispiel eines erfindungsgemäßen Programmiersystems, dargestellt in Fig. 1, umfaßt eine als Ganzes mit 10 bezeichnete Datenverarbeitungseinrichtung, mit welcher eine Dateneingabeeinrichtung 12 verbunden ist, die beispielsweise als Tastenfeld ausgebildet ist.

Ferner ist mit der Datenverarbeitungseinrichtung 10 eine Visualisierungseinrichtung 14, beispielsweise ein Bildschirm, verbunden, welcher in der Lage ist, sowohl grafische als auch numerische Informationen darzustellen.

Zusätzlich ist mit der Datenverarbeitungseinrichtung 10 eine Zeigereinrichtung 16 verbunden, welche beispielsweise dazu dient, auf dem Bildschirm 14 einzelne Elemente anzusprechen.

Die erfindungsgemäße Datenverarbeitungseinrichtung arbeitet mit einer Systemspeichereinheit 18, sowie einer Arbeitsspeichereinheit 20 und einer Hintergrundspeichereinheit 22 zusammen, die nachfolgend noch im einzelnen erläutert werden.

Die Datenverarbeitungseinrichtung 10 ist in der Lage, mit externen Geräten, beispielsweise dem Gerät 24, zu kommunizieren oder über eine Schnittstelleneinheit 26 sowie eine Datenleitung 28 mit anderen Geräten Daten auszutauschen.

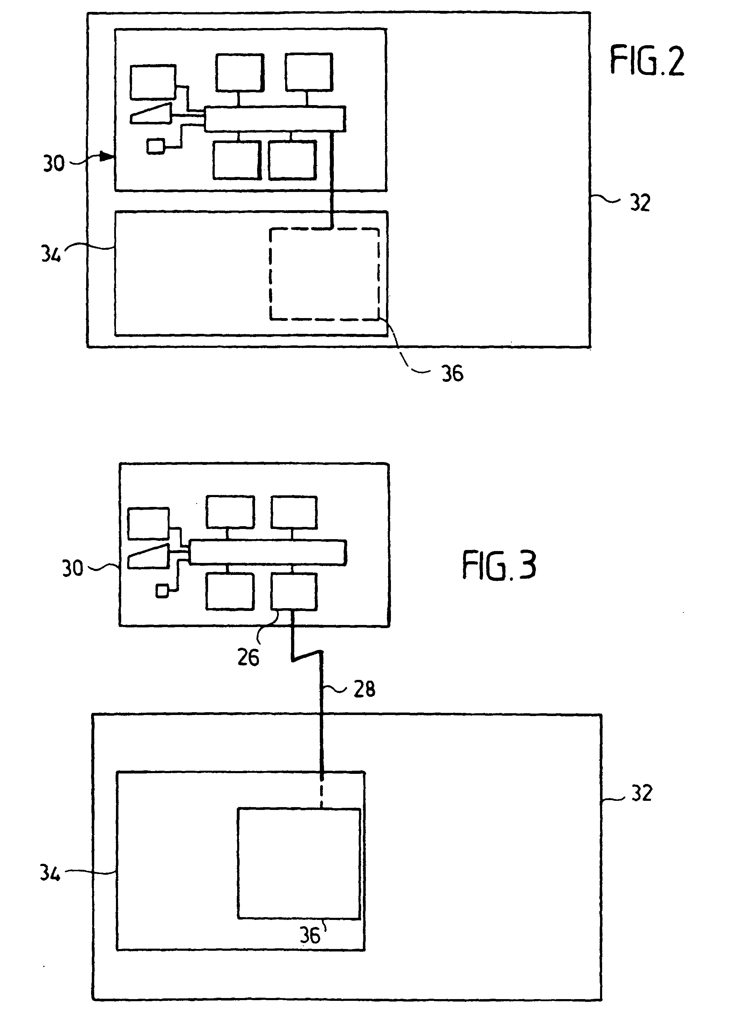

Ein Einsatzbeispiel eines erfindungsgemäßen Programmiersystems ist in Fig. 2 dargestellt. In diesem Fall ist das in Fig. 1 als Ganzes mit 30 bezeichnete Programmiersystem in eine Werkzeugmaschine 32 integriert und arbeitet unmittelbar mit der für die Werkzeugmaschine vorgesehenen Maschinensteuerung 34 zusammen, wobei dem Programmiergerät 30 insbesondere ein unmittelbarer Zugriff auf einen Maschinenprogrammspeicher 36 der Maschinensteuerung 34, beispielsweise ausgebildet als CNC-Steuerung, möglich ist.

Alternativ dazu ist es möglich, wie in Fig. 3 dargestellt, das erfindungsgemäße Programmiergerät 30 derart einzusetzen, daß dieses über die Schnittstelleneinheit 26 und die Datenleitung 28 mit der Maschinensteuerung 34, insbesondere dem Maschinenprogrammspeicher 36 derselben, kommuniziert, wobei in diesem Fall das Programmiergerät 30 beispielsweise in Form eines mit der Maschinensteuerung 32 kommunizierenden externen Arbeitsplatzrechners realisiert ist.

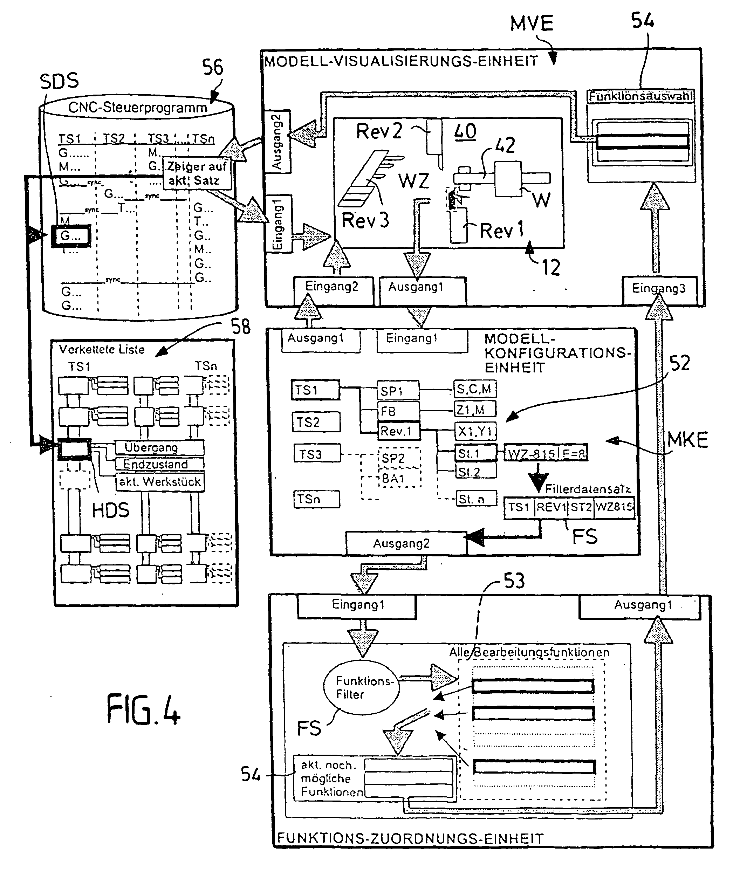

Erfindungsgemäß umfaßt die Datenverarbeitungseinrichtung 10, wie in Fig. 4 dargestellt, eine Modell-Visualisierungs-Einheit MVE, welche dazu dient, die Visualisierungseinrichtung 14, beispielsweise den Bildschirm, anzusteuern.

Die Modell-Visualisierungs-Einheit generiert dabei, wie in Fig. 4 dargestellt, auf der Visualisierungseinrichtung 14 ein Maschinenbild 40 und somit eine virtuelle Werkzeugmaschine, welche beispielsweise eine virtuelle Werkstückspindel W, mit einem virtuellen Werkstück 42 und mehrere virtuelle Revolver REV1, REV2 und REV3 umfaßt, die zur Bearbeitung des virtuellen Werkstücks 42 dienen und in mehrere Stationen schaltbar sowie in den einzelnen Stationen mit unterschiedlichen virtuellen Werkzeugen WZ bestückbar sind.

Die Revolver REV1 bis REV3 sowie die Werkstückspindel W stellen dabei einzelne virtuelle Funktionseinheiten der virtuellen Werkzeugmaschine dar, wobei die Revolver REV1 bis REV3 Bearbeitungseinheiten der Werkzeugmaschine sind, mit welchen das Werkstück 42 entsprechend einer gewünschten Kontur bearbeitbar ist.

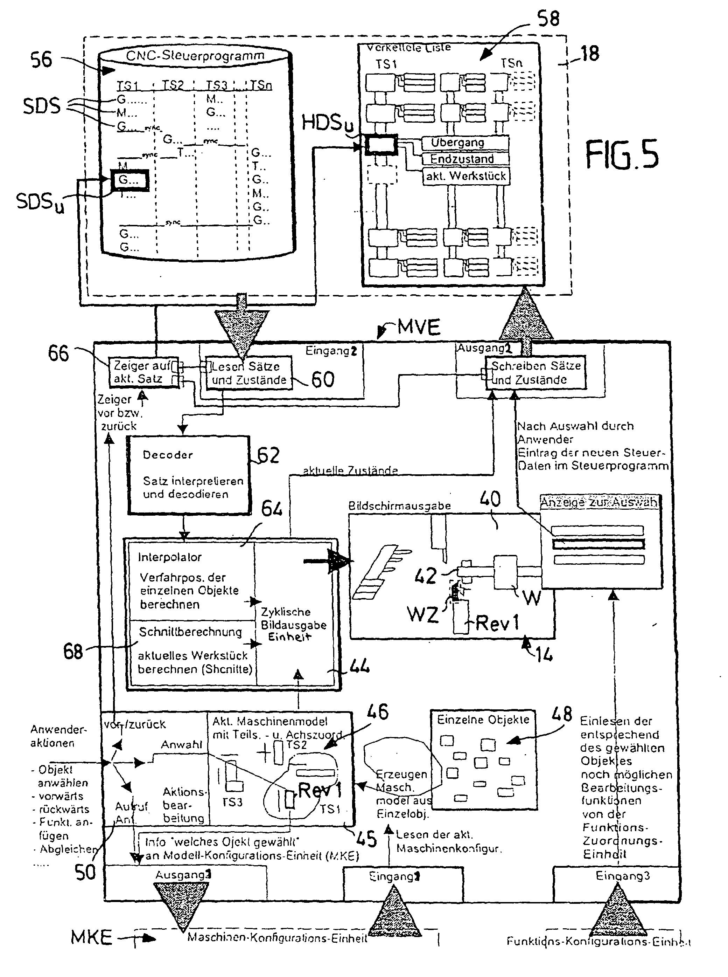

Zur Darstellung der virtuellen Funktionseinheiten REV1 bis REV3 sowie W ist die Modell-Visualisierungs-Einheit MVE, wie nochmals vergrößert in Fig. 5 dargestellt, mit einer zyklischen Bildausgabeeinheit 44 versehen, welche die Daten für das Maschinenbild 40 von einer Maschinenmodelleinheit 45 empfängt.

Die Maschinenmodelleinheit 45 generiert ein Maschinenmodell 46 der virtuellen Werkzeugmaschine unter Kombination einzelner Objekte 48, welche Symbole für die virtuellen Funktionseinheiten darstellen, und verknüpft diese einzelnen Objekte 48 entsprechend von in einer Modellkonfigurationseinheit MKE abgelegten Daten durch Wechselwirkung mit dieser über Ausgang 1 und Eingang 1 derselben (Fig. 4).

In der Modellkonfigurationseinheit MKE sind dabei die gesamte Maschinenkonfiguration der Werkzeugmaschine, das heißt also die bei der Werkzeugmaschine 32 vorhandenen Funktionseinheiten sowie die Verknüpfung derselben und die Zuordnung derselben zu einzelnen Teilsystemen oder Kanälen der Maschinensteuerung 34 und der einzelnen Bewegungsachsen der Werkzeuge WZ abgespeichert.

Vorzugsweise umfaßt die Modellkonfigurationseinheit MKE zunächst für die jeweilige Werkzeugmaschine mit Maschinensteuerung Angaben über eine Grundkonfiguration derselben, das heißt beispielsweise Angaben über die vorhandenen Teilsysteme TS1 bis Tsn, Angaben über die diesen zugeordneten Funktionseinheiten, beispielsweise Bearbeitungseinheiten in Form der Revolver REV1 bis REV3, und der einzelnen Stationen der ST1 bis Stn der Revolver, wobei zunächst eine Bestückung mit Werkzeugen fehlt, die dann in Anpassung an das jeweils zu bearbeitende Werkstück erfolgen kann.

Die erfindungsgemäße Modell-Visualisierungs-Einheit MVE ist somit an jede Maschinenkonfiguration dadurch adaptierbar, daß lediglich eine Umänderung der Daten, insbesondere der Grundkonfiguration, in der Modellkonfigurationseinheit MKE erforderlich ist, um ein geändertes Maschinenmodell 46 zu generieren.

Dieses Maschinenmodell 46 der virtuellen Werkzeugmaschine wird nun durch die zyklische Bildschirmausgabeeinheit 44 auf dem Bildschirm 14 dargestellt und zeigt all die Angaben, die für den Benutzer zur Festlegung der Vorgehensweise bei der Bearbeitung des virtuellen Werkstücks erforderlich sind, insbesondere jedoch ohne Angabe all der Daten, die für den Benutzer zur Festlegung der Bearbeitung des virtuellen Werkstücks nicht notwendig sind, also beispielsweise der Zuordnung der Funktionseinheiten zu den einzelnen Teilsystemen der Maschinensteuerung.

Über die Dateneingabeeinrichtung 12, oder über die Zeigereinrichtung 16 ist es nun möglich, mittels einer Aktionseinheit 50 eine Funktionseinheit des Maschinenmodells 46, beispielsweise den Revolver REV1 und das entsprechende Werkzeug WZ in der entsprechenden Station anzuwählen. Die in diesem Fall angewählte Funktionseinheit REV1 wird dabei auf den Bildschirm 14 dann entsprechend herausgehoben dargestellt.

Der Benutzer, dem zunächst das Maschinenbild 40 des Maschinenmodells 46 in Grundkonfiguration dargestellt wird, hat nun die Möglichkeit, das Maschinenmodell 46 insoweit zu ergänzen, als noch zusätzliche Optionen in Maschinenkonfiguration realisierbar sind. Beispielsweise wäre eine derartige zusätzliche Option das Bestücken der einzelnen Stationen ST1 bis Stn eines der Revolver mit Werkzeugen.

Diese ergänzte Maschinenkonfiguration wird dann sowohl als ergänztes Maschinenmodell 46 und auch als ergänzte Modellkonfigurationseinheit MKE festgehalten.

Die komplettierte Modellkonfigurationseinheit MKE umfaßt, wie in Fig. 4 dargestellt, Daten in Form einer hierarchischen Baumstruktur 52, auch als Modellbaum bezeichnet, durch welche beispielsweise die jeweilige virtuelle Funktionseinheit, zum Beispiel REV1, mit dem jeweiligen Teilsystem der Maschinensteuerung 34, zum Beispiel TS1, verknüpft ist und außerdem die Stationen ST1 bis STN des Revolvers REV1 in Verbindung mit dem bestückten Werkzeug, zum Beispiel WZ-815, verknüpft sind. Ferner ergibt sich aus der Baumstruktur 52, daß der Revolver REV1 in X1 und Y1-Richtung bewegbar ist und insgesamt N-Stationen ST1 bis STN aufweist, die alle mit einem Werkzeug WZ bestückt sind (Fig. 4).

Über eine Interaktion der Modell-Visualisierungs-Einheit MVE mit der Modellkonfigurationseinheit MKE ist es somit möglich, die sämtliche für das Maschinenmodell 46 erforderlichen Zusammenhänge aus der Modellkonfigurationseinheit MKE zu entnehmen und dazu verwenden einzelne der Objekte 48 zum Maschinenmodell 46 zu kombinieren, welches dann seinerseits über die zyklische Bildausgabeeinheit 44 als Maschinenbild 40 auf dem Bildschirm 14 dargestellt wird. Das Maschinenbild 40 ist so vollständig, daß ein Benutzer die Möglichkeit hat, die gesamte Vorgehensweise, die zur Bearbeitung des Werkstücks 42 erforderlich ist, zu erkennen und durch Bestimmen der einzusetzenden virtuellen Funktionseinheiten und deren virtueller Aktionen in allen Details festzulegen.

Die Modell-Visualisierungs-Einheit MVE bietet nicht nur die Möglichkeit, über die Aktionseinheit 50 nur die virtuellen Funktionseinheiten anzusprechen, sondern auch den Ablauf der virtuellen Aktionen, das heißt beispielsweise Bewegungen der Werkzeuge WZ, darzustellen.

Um die Bestimmung der virtuellen Aktionen der virtuellen Funktionseinheiten zu erleichtern, wird die Modellkonfigurationseinheit MKE dazu eingesetzt, aufgrund der Verknüpfung der einzelnen Funktionseinheiten mit der Steuerungskonfiguration einen Filterdatensatz FS zu erstellen, welcher an eine Funktionszuordnungseinheit FZE weitergegeben wird (Fig. 4).

Die Funktionszuordnungseinheit hat nun die Möglichkeit, anhand des Filterdatensatzes FS aus einer Liste 53 von möglichen Funktionen, insbesondere Bearbeitungsfunktionen, die für das angesprochene Werkzeug WZ der Funktionseinheit, z.B. REV1, noch möglichen Funktionen auszuwählen und in einer Liste 54 zusammenzustellen, die dann an die Modell-Visualisierungs-Einheit MVE übermittelt wird und dort als Liste ebenfalls von der Visualisierungseinrichtung dargestellt wird.

Aus dieser Liste 54 ist dann beispielsweise mittels der Zeigereinrichtung 16 eine mögliche Bearbeitungsfunktion auswählbar und kann somit der virtuellen Funktionseinheit, beispielsweise dem Werkzeug WZ 815 des Revolvers REV1 in der Station ST2, zugeordnet werden. Aufgrund dieser Zuordnung und der ausgewählten Bearbeitungsfunktion erfolgt dann eine Erstellung eines oder mehrerer Steuerdatensätze SDS für die jeweiligen Teilsysteme TS, welche von der Modell-Visualisierungs-Einheit MVE über einen Ausgang 2 in der Systemspeichereinheit 18 als Steuerprogramm 56 abgelegt wird.

Die Modell-Visualisierungs-Einheit MVE erzeugt jedoch nicht nur die Steuerdatensätze SDS für die einzelnen Teilsysteme TS des Steuerprogramms 56 sondern außerdem, und zwar unter Heranziehung der in der Modellkonfigurationseinheit MKE niedergelegten Baumstruktur 52 zu jedem Steuerdatensatz SDS einen Hilfsdatensatz HDS, welcher insbesondere Zustandsdaten wie Übergang und Endzustand umfaßt. Diese Hilfsdatensätze HDS werden ihrerseits in einer verketteten Liste 58 für jedes der Teilsysteme TS separat vom Steuerprogramm 56 abgelegt, jedoch so, daß jedem Steuerdatensatz SDSₙ ein entsprechender Hilfsdatensatz HDSₙ zugeordnet und auffindbar ist.

Vorzugsweise sind durch diese Hilfsdatensätze HDS sämtliche Zustandsinformationen erfaßt, die es ermöglichen, die Steuerdatensätze SDS nicht nur in ihrer im Steuerprogramm 56 vorgesehenen zeitlichen Abfolge "vorwärts" abzufahren, sondern auch diese Steuerdatensätze SDS "rückwärts" abzufahren, wobei es hierzu erforderlich ist, daß zusätzlich zum Steuerdatensatz SDS auch die sogenannte Zustandsübergangsinformation vorliegt, die es erlaubt, die Steuerdatensätze SDS "rückwärts" abzufahren. Wird beispielsweise durch einen Steuerdatensatz SDS das Öffnen einer Spannzange der Werkstückspindel durch den Befehl M11 als Aktion festgelegt, so ist es erforderlich, um diese Aktion invertieren zu können, in dem Hilfsdatensatz HDS festzuhalten, daß ein Übergang von "Spannzange zu nach Spannzange auf" erfolgt ist und außerdem der Endzustand "Spannzange auf" ebenfalls festzuhalten. Mit Hilfe dieser im Hilfsdatensatz HDS festgehaltenen Informationen und dem Befehl M11 ist es nun möglich, den ganzen Vorgang "rückwärts" abzufahren, nämlich die Spannzange vom offenen Zustand in den geschlossenen Zustand zu überführen.

In dem Hilfsdatensatz HDS in der verketteten Liste wird jedoch nicht nur der Übergang und beispielsweise der Endzustand abgespeichert, sondern es wird in der verketteten Liste 58 als Teil des Hilfsdatensatzes HDS auch noch die aktuelle Werkstückgeometrie in Form eines Geometriemodells abgespeichert, so daß zu jedem Steuerdatensatz SDS auch Information über die Geometrie des Werkstücks 42 vorliegt.

Auch diese Geometriedaten werden von der Modell-Visualisierungs-Einheit MVE in Korrelation mit dem Steuerdatensatz SDS ermittelt und als Teil des dem jeweiligen Steuerdatensatz SDS entsprechenden Hilfsdatensatzes HDS abgespeichert.

Die Modell-Visualisierungs-Einheit MVE weist ferner eine Leseeinheit 60 auf, welche in der Lage ist, in der Systemspeichereinheit 18 nicht nur das Steuerprogramm 56 sondern auch die verkettete Liste 58 auszulesen.

Ferner übergibt die Leseeinheit die erfaßten und gegebenenfalls aufbereiteten Steuerdatensätze an einen Dekoder 62, welcher in der Lage ist, den Satz zu interpretieren und zu dekodieren und dieser Dekoder 62 ist mit einem Interpolator 64 verbunden und gibt an diesen die interpretierten und dekodierten Steuerdatensätze SDS ab. Basierend hierauf steuert der Interpolator 64 unter Berücksichtigung der im Maschinenmodell 46 niedergelegten Verknüpfungen über die zyklische Bildausgabeeinheit 44 die Bewegung der virtuellen Funktionseinheiten REV1 bis REV3 und W und mithin auch die Werkzeuge WZ derselben. Der Dekoder 62 und der Interpolator 64 entsprechen dabei vorzugsweise dem Dekoder und dem Interpolator der Maschinensteuerung 34, die die tatsächlichen Funktionseinheiten der Werkzeugmaschine ansteuern.

Werden nun die Steuerdatensätze SDS des Steuerprogramms 56 "vorwärts" durchlaufen, so reichen dem Dekoder 62 und dem Interpolator 64 die Angaben der Steuerdatensätze SDS aus, um sämtliche virtuellen Aktionen der virtuellen Funktionseinheiten REV1 bis REV3 und W auf der Modellvisualisierungseinrichtung 14 ablaufen zu lassen. Lediglich zur Darstellung der Formveränderung des Werkstücks 42 werden vorzugsweise aus den Hilfsdatensätzen HDS der verketteten Liste 58 die Informationen über die Geometrie des Werkstücks miterfaßt und von der Modell-Visualisierungs-Einheit MVE ebenfalls auf der Visualisierungseinrichtung 14 dargestellt.

Soll die Bearbeitung des Werkstücks 42 "rückwärts" dargestellt werden, so ist es nicht ausreichend, die Steuerdatensätze SDS im Steuerprogramm 56 in umgekehrter Reihenfolge, also "rückwärts" auszulesen, sondern hierzu ist es ferner erforderlich, zu jedem Steuerdatensatz SDSₙ den Hilfsdatensatz HDSₙ zu erfassen und hierbei bei der Invertierung der Steuerdatensätze SDS den Endzustand und den Übergang, wie sie im entsprechenden Hilfsdatensatz HDSₙ abgespeichert sind, zu berücksichtigen.

Um gleichzeitig den entsprechenden Steuerdatensatz SDSₙ mit dem entsprechenden Hilfsdatensatz HDSₙ erfassen zu können, umfaßt die Modell-Visualisierungs-Einheit MVE noch eine Zeigereinheit 66, welche zum jeweiligen Steuerdatensatz SDSₙ den entsprechenden Hilfsdatensatz HDSₙ angibt und somit eine Verknüpfung der beiden erlaubt.

Dem Interpolator 64 ist ferner noch eine Schnittberechnungseinheit 68 zugeordnet, die ausgehend von den vom Interpolator 64 errechneten Verfahrpositionen der einzelnen Funktionseinheiten ermittelt, welche Form hierdurch das virtuelle Werkstück 42 erhält, so daß in dem Maschinenbild 40 nicht nur die Verfahrpositionen der einzelnen Funktionseinheiten darstellbar sind sondern parallel hierzu die von der Schnittberechnungseinheit 68 ermittelte aktuelle Form des virtuellen Werkstücks entsprechend den virtuellen Aktionen der virtuellen Funktionseinheiten.

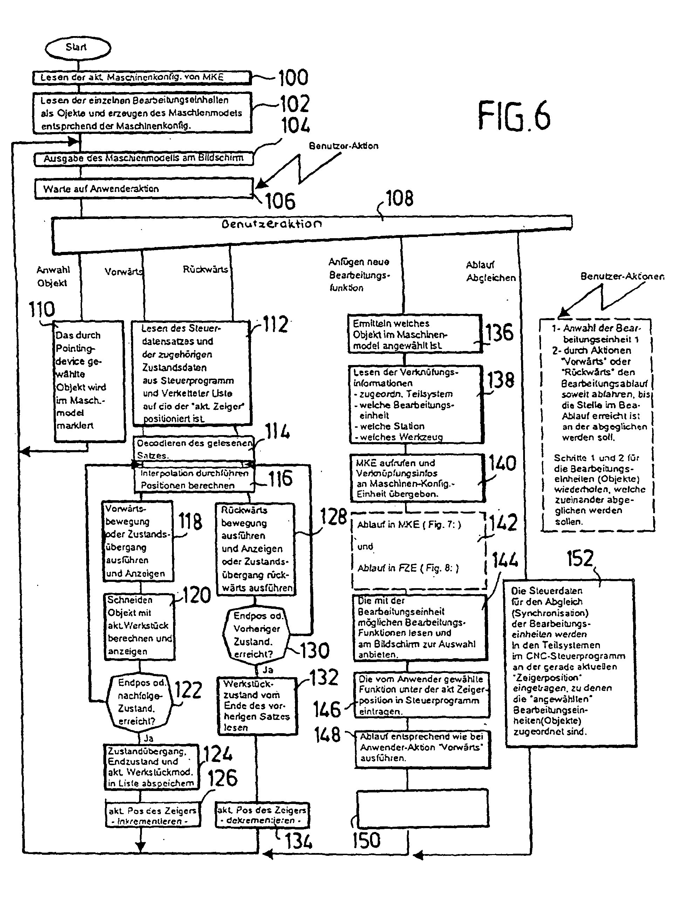

Die Arbeitsweise der Modell-Visualisierungs-Einheit MVE ist exemplarisch in Fig. 6 in Form eines Ablaufdiagramms dargestellt.

Beim Start der Modell-Visualisierungs-Einheit MVE wird in einem ersten Schritt 100 die aktuelle Maschinenkonfiguration aus der Maschinenkonfigurationseinheit MKE ausgelesen. Hierzu wird die Maschinenkonfigurationseinheit MKE über den Ausgang 1 der Modell-Visualisierungs-Einheit MVE angesprochen und die erforderlichen Daten werden über den Eingang 1 der Maschinen-Visualisierungs-Einheit MVE eingelesen. Basierend auf diesen Daten wird unter Heranziehung der einzelnen Objekte 48 in der Maschinenmodelleinheit 46 ein der Maschinenkonfiguration entsprechendes Maschinenmodell 46 der virtuellen Werkzeugmaschine erzeugt und in einem Schritt 104 über die zyklische Bildausgabeeinheit 44 als Maschinenbild 40 auf der Modellvisualisierungseinrichtung 14, zum Beispiel dem Bildschirm, ausgegeben. Nach Darstellung des Maschinenbildes 40 wartet nun die Modell-Visualisierungs-Einheit MVE, wie im Schritt 106 dargestellt, auf eine Benutzeraktion oder Benutzereingabe.

Je nach Benutzeraktion, dargestellt durch einen Block 108, erfolgt nun ein Weiterarbeiten der Modell-Visualisierungs-Einheit MVE.

Wird beispielsweise von einem Benutzer über die Aktionseinheit 50 eine bestimmte Funktionseinheit REV1 bis REV 3 oder W angesprochen, so wird von der Aktionseinheit 50 über die Maschinenmodelleinheit 45 die jeweilige Funktionseinheit markiert, wie im Block 110 angegeben und über die zyklische Bildausgabeeinheit 44 wiederum als Maschinenbild 40 gemäß Block 104 dargestellt. Nunmehr erfolgt wiederum gemäß Block 106 ein Warten auf eine weitere Benutzeraktion.

Heißt die Benutzeraktion, ausgeführt durch die Aktionseinheit 50, beispielsweise Vorwärtsbewegen oder Rückwärtsbewegen, so erfolgt, wie im Block 112 dargestellt, ein Lesen des Steuerdatensatzes im Steuerprogramm 56 und ein Lesen des entsprechenden Hilfsdatensatzes HDS in der verketteten Liste 58 durch die Leseeinheit 60 entsprechend den von der Stellung der Zeigereinheit 66.

Die Steuerdatensätze werden dann in dem Dekoder 62 gelesen und dekodiert, wie im Block 114 dargestellt, und anschließend erfolgt, wie im Block 116 dargestellt, eine Interpolation mit berechnen der Positionen der Funktionseinheiten und gleichzeitigem Berechnen der Form des Werkstücks mittels der Schnittberechnungseinheit 68. Diese Angaben werden über die zyklische Bildausgabeeinheit 44 jeweils im Maschinenbild 40 angezeigt.

Eine Vorwärtsbewegung heißt dabei beispielsweise, wie in Block 118 dargestellt, ein Ausführen einer Funktion oder eines Zustandsübergangs gesteuert durch den Interpolator 64 und Anzeigen derselben über die zyklische Bildausgabeeinheit 44, wobei unmittelbar darauf durch die Schnittberechnungseinheit 68 die Form des virtuellen Werkstücks ebenfalls berechnet wird, wie im Block 120 dargestellt. Wird die Endposition noch nicht erreicht, so wird, wie in Block 122 dargestellt, entweder zu Block 116 zurückgesprungen und es wird Block 118 und 120 erneut durchlaufen oder es wird bei Erreichen der Endposition auf Block 124 übergegangen und der Zustandsübergang, der Endzustand und die Form des virtuellen Werkstücks 42 bestimmt und als Hilfsdatensatz HDS in der verketteten Liste 58 abgespeichert. Nach Abarbeiten eines Steuerdatensatzes SDS mit dem entsprechenden Hilfsdatensatz HDS erfolgt ein Inkrementieren, das heißt ein Übergang auf den nächsten Steuerdatensatz SDS, gesteuert durch die Zeigereinheit 66, wie in Block 126 dargestellt.

Bei einer Rückwärtsbewegung wird ausgehend von Block 116 der Steuerdatensatz SDS unter Heranziehung der Angaben im Hilfsdatensatz HDS in umgekehrter Richtung ausgeführt, wie im Block 128 dargestellt und entweder, wie in Block 130 angegeben, bei Nichterreichen der Endposition wieder auf Block 116 zurückgesprungen oder bei Erreichen der Endposition auf Block 132 übergegangen, in welchem der Werkstückzustand vom Ende des Vorhergehenden Satzes gelesen wird. Im Anschluß an Block 132 erfolgt dann, wie in Block 134 dargestellt, ein Inkrementieren des von der Zeigereinheit 66 markierten Datensatzes.

Soll ein Erstellen eines neuen Steuerprogramms 58 oder ein Einfügen einer neuen Funktion erfolgen, so wird ausgehend von der Benutzeraktion gemäß Block 108 zunächst gemäß Block 136 ermittelt, welche Funktionseinheit im Maschinenmodell 46, erstellt durch die Maschinenmodelleinheit 45, mittels der Aktionseinheit 50 angewählt ist. Zu dieser Funktionseinheit werden dann gemäß Block 138 unter Heranziehung der Baumstruktur 52 weitere Angaben ermittelt, die für die Erstellung eines Steuerdatensatzes SDS erforderlich sind. Dies ist beispielsweise durch Ansprechen der Modellkonfigurationseinheit MKE möglich und es wird beispielsweise, wie in Block 140 dargestellt, über die Verknüpfungsinformationen in der Modellkonfigurationseinheit MKE festgestellt, daß beispielsweise in der Station 1 ST1 des Revolvers REV1 das Werkzeug WZ 115 angeordnet ist.

Die nachfolgend noch im einzelnen beschriebenen Abläufe in der Modellkonfigurationseinheit MKE und der Funktionszuordnungseinheit FZE werden im Block 142 zusammengefaßt. Die Funktionszuordnungseinheit gibt nun die Liste 54 der möglichen Funktionen an die Modell-Visualisierungs-Einheit MVE weiter und die Modell-Visualisierungs-Einheit stellt, wie in Block 144 zusammengefaßt, die Liste 54 der möglichen Funktionen des Werkzeugs WZ 815 ebenfalls auf der Visualisierungseinrichtung 14 zusätzlich zum Maschinenbild 40 dar.

Der Benutzer oder Anwender hat nun die Möglichkeit, wie in Block 146 dargestellt, mittels der Aktionseinheit 50 eine der möglichen Funktionen auszuwählen und diese, wie in Block 148 dargestellt, vorwärts ablaufen zu lassen.

Gleichzeitig werden, wie in Block 150 dargestellt, zu dieser auf dem Maschinenbild 40 ablaufenden virtuellen Aktion der Steuerdatensatz SDS oder die Steuerdatensätze SDS gemeinsam mit dem Hilfsdatensatz HDS oder den entsprechenden Hilfsdatensätzen HDS ermittelt und über Ausgang 2 im Steuerprogramm 56 und in der verketteten Liste 58 abgelegt.

Eine weitere Benutzeraktion kann ausgehend von Block 108 darin gesehen werden, daß ein Abgleichen von Steuerdatensätzen SDS in den einzelnen Teilsystemen TS erforderlich ist. Hierzu wird beispielsweise eine der virtuellen Funktionseinheiten REV1 bis REV3 oder W in die Position gefahren, in welcher eine Synchronisation mit einer der anderen virtuellen Funktionseinheiten erfolgen soll. Dann wird die andere der virtuellen Funktionseinheiten ebenfalls in diese Position gefahren und es wird ein Synchronisationsbefehl gegeben.

Diesen Synchronisationsbefehl speichert dann die Modell-Visualisierungs-Einheit MVE mittels eines Steuerdatensatzes SDS im Steuerprogramm 56 ab und legt gleichzeitig den entsprechenden Hilfsdatensatz HDS in der verketteten Liste 58 an.

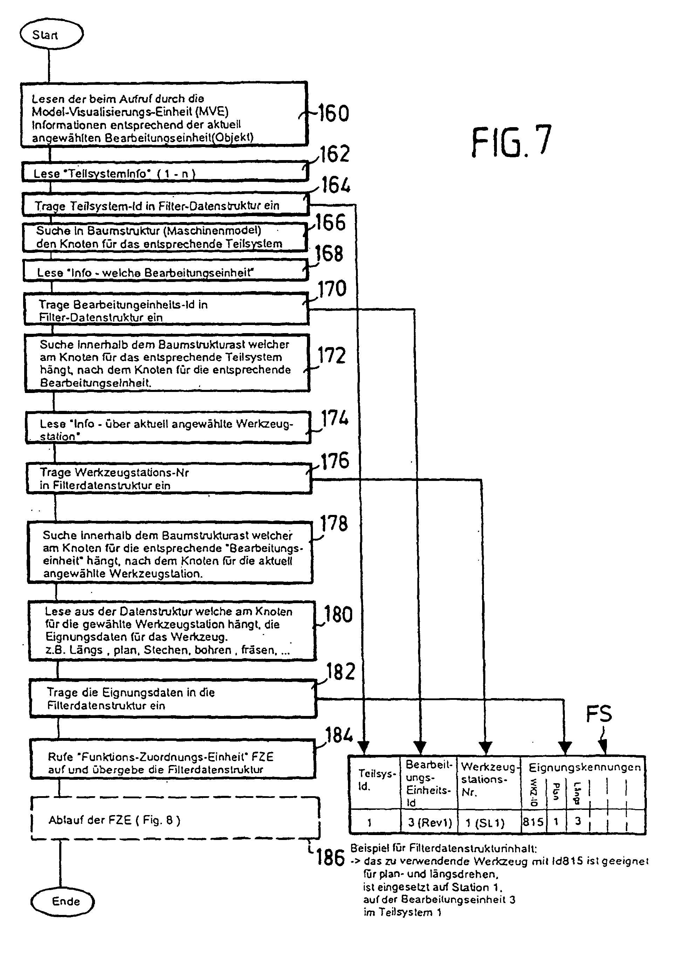

Der Funktionsablauf in der Modellkonfigurationseinheit MKE ist exemplarisch in Fig. 7 dargestellt.

Nach dem Start, wird beispielsweise im Block 160 über Ausgang 1 der Modell-Visualisierungs-Einheit MVE der Modellkonfigurationseinheit MKE vorgegeben, welche der Funktionseinheiten von der Aktionseinheit 50 angewählt wurde. Ausgehend hiervon liest die Modellkonfigurationseinheit MKE, wie in Block 162 angegeben, in der Baumstruktur 52, die entweder in der Maschinenmodelleinheit 45 und/oder in der Modellkonfigurationseinheit vorliegt, welches Teilsystem dieser Funktionseinheit zugeordnet ist und trägt, wie in Block 164 angegeben, die Teilsysteminformation in den Filterdatensatz FS ein.

Danach wird weiter die Baumstruktur sukzessive abgearbeitet. Gemäß Block 166 wird der Knoten, das heißt die Verknüpfung für das entsprechende Teilsystem aufgesucht und dann im Block 168 die Information über die jeweilige Bearbeitungseinheit gelesen und gemäß Block 170 dann in die Filterdatenstruktur FS eingetragen.

Im nachfolgenden Block 172 erfolgt das Aufsuchen des nächsten Knotens betreffend die Verbindung der Bearbeitungseinheit mit der jeweiligen Werkzeugstation und es wird die Information über die ausgewählte Werkzeugstation in Block 174 gelesen und in Block 176 in den Filterdatensatz FS eingetragen.

Weitergehend in der Baumstruktur 52 wird gemäß Block 178 der Knoten für die Verknüpfung der Werkzeugstation mit dem jeweiligen Werkzeug ermittelt und aus der Baumstruktur 52 gemäß Block 180 werden die Daten für das Werkzeug ausgelesen, wobei die Daten für das Werkzeug vielfältiger Art sein können. Es kann sich hierbei um Eignungsdaten handeln, die angeben, für welche Bearbeitung das Werkzeug einsetzbar ist und es kann sich um Werkzeugabmessungen handeln. Auch diese Eignungsdaten werden dann gemäß Block 182 in den Filterdatensatz FS eingetragen.

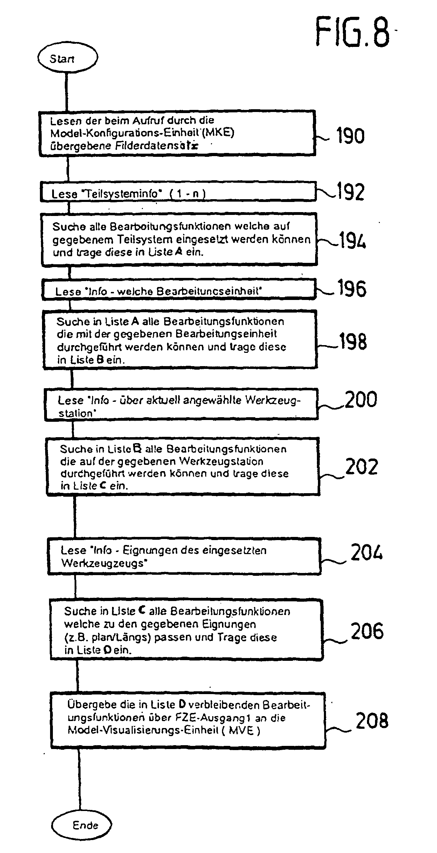

Unter Heranziehung dieses Filterdatensatzes FS wird nun gemäß Block 184 die Funktionszuordnungseinheit FZE aufgerufen und in dieser wird nun, wie in Block 186 zusammenfassend dargestellt, die Liste der mit diesem Werkzeug möglichen Bearbeitungen ermittelt, wie im einzelnen im Zusammenhang mit Fig. 8 erläutert wird.

Der Ablauf in der Funktionszuordnungseinheit FZE, dargestellt in Fig. 8 sieht folgendermaßen aus:

Zunächst wird, wie in Block 190 dargestellt, beim Aufruf der Funktionszuordnungseinheit FZE durch die Modellkonfigurationseinheit MKE der Filterdatensatz FS über Ausgang 2 der Modellkonfigurationseinheit MKE und Eingang 1 der Funktionszuordnungseinheit FZE eingelesen. Dann wird zunächst gemäß Block 192 die Information betreffend das jeweilige Teilsystem gelesen und entsprechend dieser Information werden gemäß Block 194 in der Liste 53 aller möglichen Bearbeitungsfunktionen diejenigen Bearbeitungsfunktionen ausgesucht, welche auf dem Teilsystem gemäß dem Filterdatensatz FS eingesetzt werden können und diese werden dann in eine Liste A eingetragen.

Darauf folgend wird gemäß Block 196 im Filterdatensatz FS die Informationsfunktionseinheit oder Bearbeitungseinheit gelesen und gemäß Block 198 werden in der Liste A alle Bearbeitungsfunktionen aufgesucht, die mit der jeweils vorgegebenen Bearbeitungseinheit durchgeführt werden können und in eine Liste B eingetragen. Gemäß Block 200 wird anschließend im Filterdatensatz FS die Information über die aktuelle Werkzeugstation gelesen und es werden in der Liste B alle Bearbeitungsfunktionen aufgesucht, die auf der gegebenen Werkzeugstation durchgeführt werden können und in eine Liste C eingetragen, wie in Block 202 dargestellt. Anschließend wird, wie in Block 204 dargestellt, in dem Filterdatensatz FS die Information bezüglich des Werkzeugs, insbesondere der Eignungen des Werkzeugs gelesen und anschließend, wie in Block 206 dargestellt werden über diese Information betreffend der Eignungen des Werkzeugs aus der Liste C alle Bearbeitungsfunktionen erfaßt, welche zu den gegebenen Eignungen passen und in Liste D eingetragen.

Die Liste D entspricht der Liste 54 der mit diesem Werkzeug in der jeweiligen Werkzeugstation der jeweiligen Bearbeitungseinheit, zugeordnet dem jeweiligen Teilsystem möglichen Aktionen oder Bearbeitungen und diese Liste 54 wird über einen Ausgang 1 der Funktionszuordnungseinheit an die Modell-Visualisierungs-Einheit MVE übermittelt und über einen Eingang 3 erfaßt. Die Modell-Visualisierungs-Einheit MVE stellt dann, wie in Block 208 dargestellt, den gesamten Inhalt der Liste 54 aller möglichen Bearbeitungsfunktionen auf der Modellvisualisierungseinrichtung 14 dar.

Aus der auf der Modellvisualisierungseinrichtung 14 dargestellten Liste 54 aller mit dem jeweiligen Werkzeug möglichen Bearbeitungsfunktionen können nun eine oder mehrere Bearbeitungsfunktionen ausgewählt und dem jeweiligen Werkzeug zugeordnet werden.

Die Modellvisualisierungseinrichtung MVE ermittelt nun aufgrund dieser ausgewählten Bearbeitungsfunktion oder Bearbeitungsfunktionen den Steuerdatensatz SDS oder die Steuerdatensätze SDS und, zusammen mit den Hilfsdatensätzen HDS und legt diese in dem Steuerprogramm 56 und in der verketteten Liste 58 ab.

Nach Ablegen der Steuerdatensätze SDS erfolgt in unmittelbarem Anschluß eine Darstellung der ausgewählten Bearbeitungsfunktionen, nämlich durch Auslesen der unmittelbar vorher erzeugten Steuerdatensätze SDS und gegebenenfalls Hilfsdatensätze SDS mit der Leseeinheit 60 in der beschriebenen Art und Weise, so daß durch Einsatz des Dekoders 62 und des Interpolators 64 die Bewegungen des jeweiligen Werkzeugs WZ darstellbar sind und andererseits gleichzeitig die Schnittberechnungseinheit 68 die Veränderung des virtuellen Werkstücks 42 ermittelt und ebenfalls über die zyklische Bildausgabeeinheit darstellt, wie vorstehend beschrieben.

Dabei kann - wie ebenfalls vorstehend beschrieben - sowohl die Bearbeitung im Rahmen eines Vorwärtslaufs oder im Rahmen eines Rückwärtslaufs dargestellt werden, um dem Benutzer die Möglichkeit zu eröffnen, die soeben programmierte Bearbeitung des virtuellen Werkstücks 42 im Detail nachzuvollziehen und auf ihre Richtigkeit zu überprüfen.

Die erfindungsgemäße Modell-Visualisierungs-Einheit MVE ist jedoch nicht notwendigerweise ausschließlich im Zusammenhang mit dem erfindungsgemäßen Programmiersystem einsetzbar, sondern es ist auch denkbar, die Modell-Visualisierungs-Einheit ohne die Möglichkeit, einzelne virtuelle Funktionseinheiten anzusprechen und diesen virtuelle Aktionen vorzugeben, dazu einsetzbar, ein bereits bestehendes Steuerprogramm 56 im Vorwärts- und Rückwärtslauf darzustellen und somit anhand der virtuellen, von der Maschinenmodelleinheit 45 erzeugten Werkzeugmaschine Steuerprogramme für Werkzeugmaschinen zu visualisieren und mittels der Visualisierungseinrichtung für einen Benutzer überprüfbar zu machen, wobei der Benutzer aufgrund der Schnittberechnungseinheit 68 auch dargestellt erhält, wie sich das virtuelle Werkstück 42 bei Durchführung der virtuellen Bearbeitung verändert und außerdem der Benutzer die Möglichkeit hat, jeweils die Bearbeitung im Vorwärtslauf und im Rückwärtslauf zu überprüfen.

Im Fall eines derartigen Einsatzes der Modell-Visualisierungs-Einheit wird ausgehend von einem vorgegebenen Steuerprogramm 56 mittels der Leseeinheit 60 Steuerdatensatz SDS für Steuerdatensatz SDS ausgelesen, im Dekoder 62 dekodiert und im Interpolator 66 werden dann die Bewegungen der virtuellen Funktionseinheiten gesteuert, wobei die zyklische Bildausgabeeinheit 44 dann die Visualisierungseinrichtung 14 ansteuert.

Gleichzeitig erfolgt mit der Schnittberechnungseinheit 68 eine Ermittlung der Formänderung des virtuellen Werkstücks 42 und zusätzlich wird das Maschinenmodell 46 in der Maschinenmodelleinheit 45 dazu herangezogen, die vom Interpolator 64 kommenden Steuerbefehle auf der virtuellen Werkzeugmaschine auszuführen, so daß die auf der Visualisierungseinrichtung 14 dargestellten virtuellen Funktionseinheiten und virtuellen Werkstücke 42 sich entsprechend den Verhältnissen der tatsächlichen Werkzeugmaschine verhalten.

Gleichzeitig wird unter Heranziehung des Maschinenmodells 46 von der Modell-Visualisierungs-Einheit MVE zu jedem Steuerdatensatz SDS der entsprechende Hilfsdatensatz HDS generiert und in der verketteten Liste 58 abgelegt, so daß während eines sogenannten "Vorwärtslaufs, für welchen die Steuerdatensätze SDS ausreichend sind, um gemeinsam mit dem Maschinenmodell 46 die virtuelle Werkzeugmaschine und die Bearbeitungen visualisieren zu können, gleichzeitig die Hilfsdatensätze HDS ermittelt und in der verketteten Liste 58 abgelegt werden, so daß nach einem Vorwärtslauf auch ein Rückwärtslauf möglich ist.

## Patentansprüche

1. Verfahren zum Erstellen eines mindestens eine Folge von Steuerdatensätzen (SDS) aufweisenden Steuerprogramms (56) für eine Werkzeugmaschine (32) zur Bearbeitung eines Werkstücks (42) auf dieser mittels von diesem Steuerprogramm (56) gesteuerter Funktionseinheiten (REV1, REV2, REV3, W) der Werkzeugmaschine (32), bei welchem zur Erstellung des Steuerprogramms (56) von einer Datenverarbeitungseinrichtung (10) ein virtuelles Werkstück (42) und mindestens eine virtuelle Funktionseinheit (REV1, REV2, REV3, W) für einen Benutzer dargestellt werden,
von dem Benutzer die einzelnen virtuellen Funktionseinheiten (REV1, REV2, REV3, W) angesprochen und diesen virtuelle Aktionen mittels einer Dateneingabeeinrichtung (12) vorgegeben werden,
und bei welchen die den einzelnen virtuellen Funktionseinheiten (REV1, REV2, REV3, W) vorgegebenen Aktionen von der Datenverarbeitungseinrichtung (10) unter Berücksichtigung einer dieser vorgegebenen Maschinen- und Steuerungskonfiguration selbsttätig in kollisionsfreie Aktionen erlaubende Steuerdatensätze (SDS) des Steuerprogramms (56) umgesetzt werden.

2. Verfahren nach Anspruch 1, **dadurch gekennzeichnet, daß** für den Benutzer alle virtuellen Funktionseinheiten (REV1, REV2, REV3, W) der Werkzeugmaschine (32) entsprechend der aktuellen Maschinenkonfiguration in Form eines Maschinenbildes (40) dargestellt werden.

3. Verfahren nach Anspruch 2, **dadurch gekennzeichnet, daß** alle virtuellen Funktionseinheiten (REV1, REV2, REV3, W) und deren virtuelle Aktionen unter Berücksichtigung der Maschinen- und Steuerungskonfiguration der Werkzeugmaschine (32) dargestellt werden.

4. Verfahren nach einem der voranstehenden Ansprüche, **dadurch gekennzeichnet, daß** für den Benutzer die virtuellen Funktionseinheiten (REV1, REV2, REV3, W) und deren virtuelle Aktionen nach Ansprechen und Vorgabe derselben dargestellt werden.

5. Verfahren nach einem der voranstehenden Ansprüche, **dadurch gekennzeichnet, daß** eine Verknüpfung von definiert vorgegebenen virtuellen Funktionseinheiten (REV1, REV2, REV3, W) zur Berücksichtigung der Maschinen- und Steuerungskonfiguration von der Datenverarbeitungseinrichtung (10) selbsttätig durchgeführt wird.

6. Verfahren nach einem der voranstehenden Ansprüche, **dadurch gekennzeichnet, daß** die Berücksichtigung der Maschinen- und Steuerungskonfiguration unter Zuhilfenahme eines Maschinenmodells (46) durchgeführt wird, welches Informationen über die Maschinen- und Steuerungskonfiguration repräsentierende Verknüpfungen der virtuellen Funktionseinheiten (REV1, REV2, REV3, W) umfaßt.

7. Verfahren nach Anspruch 6, **dadurch gekennzeichnet, daß** das Maschinenmodell (46) eine Grundkonfiguration der virtuellen Funktionseinheiten (REV1, REV2, REV3, W) der Werkzeugmaschine (32) umfaßt, welche vom Benutzer erweiterbar ist.

8. Verfahren nach Anspruch 6 oder 7, **dadurch gekennzeichnet, daß** das Maschinenmodell (46) mittels gespeicherter Verknüpfungsinformationen erstellt wird.

9. Verfahren nach einem der Ansprüche 6 bis 8, **dadurch gekennzeichnet, daß** in der Datenverarbeitungseinrichtung (10) das Maschinenmodell (46) abgespeichert wird, welches die einzelnen virtuellen Funktionseinheiten (REV1, REV2, REV3, W) der Werkzeugmaschine (32) entsprechend der Maschinen und Steuerungskonfiguration verknüpft.

10. Verfahren nach einem der Ansprüche 6 bis 9, **dadurch gekennzeichnet, daß** in der Datenverarbeitungseinrichtung (10) das Maschinenmodell (46) in Form einer Datenbaumstruktur (42) eingesetzt wird.

11. Verfahren nach Anspruch 9, **dadurch gekennzeichnet, daß** die Datenbaumstruktur die Form einer hierarchischen Datenbaumstruktur (52) hat.

12. Verfahren nach einem der voranstehenden Ansprüche, **dadurch gekennzeichnet, daß** von der Datenverarbeitungseinrichtung zu jeder virtuellen Funktionseinheit (REV1, REV2, REV3, W) die mit dieser realisierbaren Bearbeitungsfunktionen selbsttätig ermittelt werden.

13. Verfahren nach Anspruch 12, **dadurch gekennzeichnet, daß** für die Ermittlung der realisierbaren Bearbeitungsfunktion ein Filterdatensatz (FS) erstellt wird.

14. Verfahren nach Anspruch 13, **dadurch gekennzeichnet, daß** der Filterdatensatz (FS) aufgrund der Maschinen- und Steuerungskonfiguration erstellt wird.

15. Verfahren nach einem der Ansprüche 12 bis 14, **dadurch gekennzeichnet, daß** von der Datenverarbeitungseinrichtung (10) der Filterdatensatz (FS) entsprechend der Maschinen- und Steuerungskonfiguration selbständig ermittelt wird.

16. Verfahren nach einem der Ansprüche 13 bis 15, **dadurch gekennzeichnet, daß** mit dem Filterdatensatz (FS) aus einer Liste (53) sämtlicher möglicher Bearbeitungsfunktionen eine Liste (54) von mit der jeweiligen virtuellen Funktionseinheit (REV1, REV2, REV3, W) ausführbaren Bearbeitungsfunktionen selektiert wird.

17. Verfahren nach einem der Ansprüche 12 bis 16, **dadurch gekennzeichnet, daß** die Liste (54) mit den der jeweiligen virtuellen Funktionseinheit (REV1, REV2, REV3, W) zugeordneten Bearbeitungsfunktionen für einen Benutzer anwählbar präsentiert wird.

18. Verfahren nach einem der Ansprüche 12 bis 17, **dadurch gekennzeichnet, daß** von der Datenverarbeitungseinrichtung (10) aufgrund der angesprochenen virtuellen Funktionseinheit (REV1, REV2, REV3, W) und der entsprechend angewählten virtuellen Bearbeitungsfunktion die Steuerdatensätze (SDS) für das Steuerprogramm (56) selbsttätig ermittelt werden.

19. Verfahren nach einem der voranstehenden Ansprüche, **dadurch gekennzeichnet, daß** die Formänderung eines virtuellen Werkstücks (42) durch Bearbeitung desselben mittels virtueller Aktionen der virtuellen Funktionseinheiten (REV1, REV2, REV3, W) dargestellt wird.

20. Verfahren nach Anspruch 19, **dadurch gekennzeichnet, daß** die Formänderung des virtuellen Werkstücks (42) durch eine Schnittberechnung (68) ermittelt wird.

21. Verfahren nach einem der voranstehenden Ansprüche, **dadurch gekennzeichnet, daß** von der Datenverarbeitungseinrichtung (10) die Steuerdatensätze (SDS) des Steuerprogramms (56) in derselben Weise dekodiert und interpoliert werden, wie in einem Dekoder und einem Interpolator der Maschinensteuerung (34) für die Funktionseinheiten der Werkzeugmaschine (32).

22. Verfahren nach Anspruch 21, **dadurch gekennzeichnet, daß** bei der Interpolation unter Heranziehung der Maschinenund Steuerungskonfiguration die virtuellen Aktionen der virtuellen Funktionseinheiten (REV1, REV2, REV3, W) ermittelt und dargestellt werden.

23. Verfahren nach Anspruch 22, **dadurch gekennzeichnet, daß** bei der Interpolation zur Ermittlung der virtuellen Aktionen das Maschinenmodell (52) gezogen wird.

24. Verfahren nach einem der Ansprüche 19 bis 23, **dadurch gekennzeichnet, daß** an dem virtuellen Werkstück (42) die Bearbeitung desselben zu jedem Zeitpunkt dargestellt wird.

25. Verfahren nach einem der voranstehenden Ansprüche, **dadurch gekennzeichnet, daß** die virtuellen Aktionen der virtuellen Funktionseinheiten (REV1, REV2, REV3, W) in einer für eine Bearbeitung des virtuellen Werkstücks (42) vorgesehenen Bearbeitungsabfolge oder in umgekehrter Bearbeitungsabfolge visualisiert werden.

26. Verfahren nach Anspruch 25, **dadurch gekennzeichnet, daß** zusätzlich zu den Steuerdatensätzen (SDS) unter Berücksichtigung der Werkzeugmaschinen- und Steuerungskonfiguration zu jedem Steuerdatensatz (SDS) Hilfsdaten (HDS) erzeugt werden, welche ein Visualisieren der virtuellen Aktionen in umgekehrter Bearbeitungsabfolge erlauben.

27. Verfahren nach Anspruch 26, **dadurch gekennzeichnet, daß** jedem Steuerdatensatz (SDS) die Hilfsdaten in Form eines Hilfsdatensatzes (HDS) zugeordnet werden.

28. Verfahren nach Anspruch 27, **dadurch gekennzeichnet, daß** die Hilfsdatensätze (HDS) in einer verketteten Liste (58) abgespeichert werden.

29. Verfahren nach Anspruch 27 oder 28, **dadurch gekennzeichnet, daß** der Hilfsdatensatz (HDS) einen Übergangs und/oder Zustandsdatensatz umfaßt.

30. Verfahren nach einem der voranstehenden Ansprüche, **dadurch gekennzeichnet, daß** zu jedem Steuerdatensatz (SDS) Formdaten des virtuellen Werkstücks (42) ermittelt werden.

31. Verfahren nach Anspruch 30, **dadurch gekennzeichnet, daß** die Formdaten im Hilfsdatensatz (HDS) abgelegt werden.

32. Verfahren nach einem der Ansprüche 28 bis 31, **dadurch gekennzeichnet, daß** sowohl auf das Steuerprogramm (56) als auch auf die verkettete Liste (58) zugegriffen und zu jedem Steuerdatensatz (SDS) der entsprechende Hilfsdatensatz (HDS) aus der verketteten Liste (58) ausgelesen wird.

33. Verfahren nach Anspruch 32, **dadurch gekennzeichnet, daß** von der Datenverarbeitungseinrichtung (10) sowohl der abzuarbeitende Steuerdatensatz (SDS) als auch der zugeordnete Hilfsdatensatz (HDS) gleichzeitig bestimmt wird.

34. Verfahren nach einem der Ansprüche 28 bis 33, **dadurch gekennzeichnet, daß** die verkettete Liste (58) abgespeichert und jedem Steuerdatensatz (SDS) ein Hilfsdatensatz (HDS) eindeutig zugeordnet wird.

35. Verfahren nach einem der Ansprüche 26 bis 34, **dadurch gekennzeichnet, daß** mit der Datenverarbeitungseinrichtung (10) Steuerdatensätze (SDS) und Hilfsdaten (HDS) in Bearbeitungsabfolge oder in umgekehrter Bearbeitungsabfolge erfaßt und durch die virtuellen Funktionseinheiten (REV1, REV2, REV3, W) und virtuellen Aktionen dargestellt werden.

36. Programmiersystem zur Erzeugung eines Steuerprogramms (56) für eine Werkzeugmaschine(32), welches zur Bearbeitung eines Werkstücks (42) mittels von diesem Steuerprogramm (56) gesteuerter Funktionseinheiten (REV1, REV2, REV3, W) der Werkzeugmaschine (32) dient, umfassend eine Dateneingabeeinrichtung (12) zum Eingeben und/oder Ändern von Informationen die das Steuerprogramm (56) der Werkzeugmaschine (32) bestimmen,
eine Visualisierungseinrichtung (14) zum Darstellen der Informationen und eine Datenverarbeitungseinrichtung (10), die die Informationen in das Steuerprogramm (56) bestimmende Steuerdatensätze (SDS) umsetzt und in einem Programmspeicher abspeichert,
wobei die Datenverarbeitungseinrichtung (10) eine Modell-Visualisierungs-Einheit (MVE) umfaßt, welche so ausgebildet ist, daß mit dieser mindestens eine virtuelle Funktionseinheit (REV1, REV2, REV3, W) der Werkzeugmaschine (32) und deren virtuelle Aktionen mittels der Visualisierungseinrichtung (14) darstellbar sind, wobei die Modell-Visualisierungs-Einheit (MVE) so mit der Dateneingabeeinrichtung (12) zusammenwirkt, daß die virtuellen Funktionseinheiten (REV1, REV2, REV3, W) über die Dateneingabeeinrichtung (12) ansprechbar sind und diesen virtuellen Funktionseinheiten virtuelle Aktionen vorgebbar sind, und wobei mit der Modell-Visualisierungs-Einheit (MVE) die den einzelnen virtuellen Funktionseinheiten (REV1, REV2, REV3, W) vorgegebenen virtuellen Aktionen unter Berücksichtigung der Maschinen- und Steuerungskonfiguration in kollisionsfreie Aktionen erlaubende Steuerdatensätze (SDS) des Steuerprogramms (56) umsetzbar sind.

37. Programmiersystem nach Anspruch 36, **dadurch gekennzeichnet, daß** mit der Modell-Visualisierungs-Einheit (MVE) alle virtuellen Funktionseinheiten (REV1, REV2, REV3, W) der Werkzeugmaschine (32) entsprechen der aktuellen Maschinenkonfiguration in Form eines Maschinenbildes (40) auf der Visualisierungseinrichtung (14) darstellbar sind.

38. Programmiersystem nach Anspruch 36 oder 37, **dadurch gekennzeichnet, daß** die Modell-Visualisierungs-Einheit (MVE) die virtuellen Funktionseinheiten (REV1, REV2, REV3, W) und deren virtuelle Aktionen unter Berücksichtigung der Maschinen- und Steuerungskonfiguration der Werkzeugmaschine (32) auf der Visualisierungseinrichtung (14) darstellt.

39. Programmiersystem nach einem der Ansprüche 36 bis 38, **dadurch gekennzeichnet, daß** die Modell-Visualisierungs-Einheit (MVE) die virtuellen Funktionseinheiten (REV1, REV2, REV3, W) und deren virtuelle Aktionen nach Ansprechen und Vorgabe derselben auf der Visualisierungseinrichtung (14) darstellt.

40. Programmiersystem nach einem der Ansprüche 36 bis 39, **dadurch gekennzeichnet, daß** eine Verknüpfung von definiert vorgegebenen virtuellen Funktionseinheiten (REV1, REV2, REV3, W) zur Berücksichtigung der Maschinen- und Steuerungskonfiguration mittels einer mit der Modell-Visualisierungs-Einheit (MVE) zusammenwirkende Modellkonfigurationseinheit (MKE) erfolgt.

41. Programmiersystem nach einem der Ansprüche 36 bis 40, **dadurch gekennzeichnet, daß** die Berücksichtigung der Maschinen- und Steuerungskonfiguration unter Zuhilfenahme eines von der Modell-Visualisierungs-Einheit (MVE) erstellten Maschinenmodells (46) erfolgt, welches Informationen über die Maschinen- und Steuerungskonfiguration repräsentierende Verknüpfungen der virtuellen Funktionseinheiten (REV1, REV2, REV3, W) umfaßt.

42. Programmiersystem nach Anspruch 41, **dadurch gekennzeichnet, daß** das Maschinenmodell (46) eine Grundkonfiguration der virtuellen Funktionseinheiten (REV1, REV2, REV3, W) der Werkzeugmaschine (32) umfaßt, welche vom Benutzer erweiterbar ist.

43. Programmiersystem nach Anspruch 41 oder 42, **dadurch gekennzeichnet, daß** das Maschinenmodell (46) mittels Verknüpfungsinformationen aus einer Modellkonfigurationseinheit (MKE) erstellbar ist.

44. Programmiersystem nach einem der Ansprüche 41 bis 43, **dadurch gekennzeichnet, daß** die Datenverarbeitungseinrichtung (10) einen Arbeitsspeicher (20) aufweist, in welchem das Maschinenmodell (46) abgespeichert ist, welches die einzelnen virtuellen Funktionseinheiten (REV1, REV2, REV3, W) der Werkzeugmaschine (32) entsprechend der Maschinen- und Steuerungskonfiguration verknüpft.

45. Programmiersystem nach einem der Ansprüche 41 bis 44, **dadurch gekennzeichnet, daß** der Datenverarbeitungseinrichtung (10) das Maschinenmodell (46) in Form einer Datenbaumstruktur (42) vorliegt.

46. Programmiersystem nach Anspruch 45, **dadurch gekennzeichnet, daß** die Datenbaumstruktur die Form einer hierarchischen Datenbaumstruktur (52) hat.

47. Programmiersystem nach einem der Ansprüche 36 bis 46, **dadurch gekennzeichnet, daß** das der Modell-Visualisierungs-Einheit (MVE) eine Funktionszuordnungseinheit (FZE) zugeordnet ist, mit welcher zu jeder virtuellen Funktionseinheiten (REV1, REV2, REV3, W) die mit dieser realisierbaren Bearbeitungsfunktion ermittelbar sind.

48. Programmiersystem nach Anspruch 47, **dadurch gekennzeichnet, daß** für die Ermittlung der realisierbaren Bearbeitungsfunktion ein Filterdatensatz (FS) erstellbar ist.

49. Programmiersystem nach Anspruch 48, **dadurch gekennzeichnet, daß** der Filterdatensatz (FS) aufgrund der Maschinen- und Steuerungskonfiguration erstellbar ist.

50. Programmiersystem nach einem der Ansprüche 47 bis 49, **dadurch gekennzeichnet, daß** die Modellkonfigurationseinheit (MKE) den Filterdatensatz (FS) entsprechend der Maschinen- und Steuerungskonfiguration erzeugt und diesen Filterdatensatz (FS) der Funktionszuordnungseinheit (FZE) übermittelt.

51. Programmiersystem nach einem der Ansprüche 48 bis 50, **dadurch gekennzeichnet, daß** die Funktionszuordnungseinheit (FZE) mit dem Filterdatensatz (FS) aus einer Liste (53) sämtlicher möglicher Bearbeitungsfunktionen eine Liste (54) von mit der jeweiligen virtuellen Funktionseinheiten (REV1, REV2, REV3, W) ausführbaren Bearbeitungsfunktionen selektiert.

52. Programmiersystem nach einem der Ansprüche 47 bis 51, **dadurch gekennzeichnet, daß** die Funktionszuordnungseinheit (FZE) die Liste (54) mit den der jeweiligen virtuellen Funktionseinheiten (REV1, REV2, REV3, W) zugeordneten Bearbeitungsfunktionen über die Modell-Visualisierungs-Einheit (MVE) für einen Benutzer anwählbar präsentiert.

53. Programmiersystem nach einem der Ansprüche 47 bis 52, **dadurch gekennzeichnet, daß** die Modell-Visualisierungs-Einheit (MVE) aufgrund der angesprochenen Funktionseinheit (REV1, REV2, REV3, W) und der entsprechend angewählten virtuellen Bearbeitungsfunktion der Steuerdatensätze (SDS) für das Steuerprogramm (56) selbsttätig ermittelt.

54. Programmiersystem nach einem der Ansprüche 36 bis 53, **dadurch gekennzeichnet, daß** die Modell-Visualisierungs-Einheit (MVE) die Formänderung eines virtuellen Werkstücks (42) durch Bearbeitung desselben mittels virtueller Aktionen der virtuellen Funktionseinheiten (REV1, REV2, REV3, W) darstellt.

55. Programmiersystem nach Anspruch 54, **dadurch gekennzeichnet, daß** die Formänderung des virtuellen Werkstücks (42) durch eine Schnittberechnungseinheit (68) ermittelbar ist.

56. Programmiersystem nach einem der Ansprüche 36 bis 55, **dadurch gekennzeichnet, daß** die Modell-Visualisierungs-Einheit (MVE) einen Dekoder (62) und einen Interpolator (64) für die Steuerdatensätze (SDS) des Steuerprogramms (56) aufweist, welche einem Dekoder und einem Interpolator der Maschinensteuerung (34) für die Funktionseinheit der Werkzeugmaschine (32) entsprechen.

57. Programmiersystem nach Anspruch 56, **dadurch gekennzeichnet, daß** der Interpolator (64) unter Heranziehung der Maschinen- und Steuerungskonfiguration die virtuellen Aktionen der virtuellen Funktionseinheiten (REV1, REV2, REV3, W) ermittelt und die Modell-Visualisierungs-Einheit diese auf der Visualisierungseinrichtung (14) darstellt.

58. Programmiersystem nach Anspruch 57, **dadurch gekennzeichnet, daß** der Interpolator (64) zur Ermittlung der virtuellen Aktionen das Maschinenmodell (52) heranzieht.

59. Programmiersystem nach einem der Ansprüche 54 bis 58, **dadurch gekennzeichnet, daß** die Modell-Visualisierungs-Einheit (MVE) so ausgebildet ist, daß an dem virtuellen Werkstück (42) die Bearbeitung desselben zu jedem Zeitpunkt darstellbar ist.

60. Programmiersystem nach einem der Ansprüche 36 bis 59, **dadurch gekennzeichnet, daß** die virtuellen Aktionen der virtuellen Funktionseinheiten (REV1, REV2, REV3, W) in einer für eine Bearbeitung des virtuellen Werkstücks (42) vorgesehenen Bearbeitungsabfolge oder in umgekehrter Bearbeitungsabfolge visualisierbar sind.

61. Programmiersystem nach Anspruch 60, **dadurch gekennzeichnet, daß** die Modell-Visualisierungs-Einheit (MVE) so ausgebildet ist, daß diese zusätzlich zu den Steuerdatensätzen (SDS) unter Berücksichtigung der Werkzeugmaschinen- und Steuerungskonfiguration zu jedem Steuerdatensatz (SDS) Hilfsdaten (HDS) erzeugt, welche ein Visualisieren der virtuellen Aktionen in umgekehrter Bearbeitungsabfolge erlauben.

62. Programmiersystem nach Anspruch 61, **dadurch gekennzeichnet, daß** die Modell-Visualisierungs-Einheit (MVE) jedem Steuerdatensatz (SDS) die Hilfsdaten in Form eines Hilfsdatensatzes zuordnet.

63. Programmiersystem nach Anspruch 62, **dadurch gekennzeichnet, daß** die Modell-Visualisierungs-Einheit (MVE) die Hilfsdatensätze (HDS) in einer verketteten Liste (58) abspeichert.

64. Programmiersystem nach Anspruch 62 oder 63, **dadurch gekennzeichnet, daß** der Hilfsdatensatz (HDS) einen Übergangs- und/oder Zustandsdatensatz umfaßt.

65. Programmiersystem nach einem der Ansprüche 36 bis 64, **dadurch gekennzeichnet, daß** die Modell-Visualisierungs-Einheit (MVE) zu jedem Steuerdatensatz (SDS) Formdaten des virtuellen Werkstücks (42) ermittelt.

66. Programmiersystem nach Anspruch 65, **dadurch gekennzeichnet, daß** die Modell-Visualisierungs-Einheit (MVE) die Formdaten im Hilfsdatensatz (HDS) ablegt.

67. Programmiersystem nach einem der Ansprüche 63 bis 66, **dadurch gekennzeichnet, daß** die Modell-Visualisierungs-Einheit (MVE) so ausgebildet ist, daß sie sowohl auf das Steuerprogramm (56) als auch auf die verkettete Liste (58) zugreift und zu jedem Steuerdatensatz (SDS) der entsprechende Hilfsdatensatz (HDS) aus der verketteten Liste (58) auslesbar ist.

68. Programmiersystem nach Anspruch 67, **dadurch gekennzeichnet, daß** die Modell-Visualisierungs-Einheit (MVE) mittels einer Zeigereinheit (60) sowohl den abzuarbeitenden Steuerdatensatz (SDS) als auch den zugeordneten Hilfsdatensatz (HDS) bestimmt.

69. Programmiersystem nach einem der Ansprüche 61 bis 68, **dadurch gekennzeichnet, daß** die Modell-Visualisierungs-Einheit (MVE) so ausgebildet ist, daß mit dieser Steuerdatensätze (SDS) und Hilfsdaten (HDS) in Bearbeitungsabfolge oder in umgekehrter Bearbeitungsfolge erfaßbar und durch die virtuellen Funktionseinheiten (REV1, REV2, REV3, W) und virtuellen Aktionen darstellbar sind.

70. Programmiersystem nach einem der Ansprüche 36 bis 69, **dadurch gekennzeichnet, daß** die Datenverarbeitungseinrichtung (10) einen Systemprogrammspeicher (18) aufweist, in welchem das Steuerprogramm (56) abgespeichert ist.

71. Programmiersystem nach Anspruch 70, **dadurch gekennzeichnet, daß** in dem Systemprogrammspeicher (18) die verkettete Liste (58) abgespeichert ist und daß jedem Steuerdatensatz (SDS) ein Hilfsdatensatz (HDS) eindeutig zugeordnet ist.

## Claims

1. Process for generating a control program (56) for a machine tool (32) having at least one sequence of sets of control data (SDS) for the machining of a workpiece (42) on this machine tool (32) by means of operating units (REV1, REV2, REV3, W) thereof controlled by this control program (56), wherein for generating the control program (56) a virtual workpiece (42) and at least one virtual operating unit (REV1, REV2, REV3, W) are represented for a user by a data processing unit (10),
the individual, virtual operating units (REV1, REV2, REV3, W) are addressed by the user and virtual actions are specified to them by means of a data input unit (12),
and wherein the actions specified to the individual, virtual operating units (REV1, REV2, REV3, W) are converted automatically into sets of control data (SDS) of the control program (56) allowing collision-free actions by the data processing unit (10) taking into account a machine and control configuration specified to it.

2. Process as defined in claim 1, **characterized in that** all the virtual operating units (REV1, REV2, REV3, W) of the machine tool (32) are represented for the user in accordance with the actual machine configuration in the form of a machine display (40).

3. Process as defined in claim 2, **characterized in that** all the virtual operating units (REV1, REV2, REV3, W) and their virtual actions are represented, taking into account the machine and control configuration of the machine tool (32).

4. Process as defined in any one of the preceding claims, **characterized in that** the virtual operating units (REV1, REV2, REV3, W) and their virtual actions are represented for the user after they have been addressed and specified.

5. Process as defined in any one of the preceding claims, **characterized in that** a linkage of virtual operating units (REV1, REV2, REV3, W) specified in a defined manner is carried out automatically by the data processing unit (10) in order to take into account the machine and control configuration.

6. Process as defined in any one of the preceding claims, **characterized in that** the machine and control configuration is taken into account with the aid of a machine model (46) comprising information concerning linkages of the virtual operating units (REV1, REV2, REV3, W) representing the machine and control configuration.

7. Process as defined in claim 6, **characterized in that** the machine model (46) comprises a basic configuration of the virtual operating units (REV1, REV2, REV3, W) of the machine tool (32) extendible by the user.

8. Process as defined in claim 6 or 7, **characterized in that** the machine model (46) is generated by means of stored linkage information.

9. Process as defined in any one of claims 6 to 8, **characterized in that** the machine model (46) linking the individual, virtual operating units (REV1, REV2, REV3, W) of the machine tool (32) in accordance with the machine and control configuration is stored in the data processing unit (10).

10. Process as defined in any one of claims 6 to 9, **characterized in that** the machine model (46) is utilized in the data processing unit (10) in the form of a data tree structure (42).

11. Process as defined in claim 9, **characterized in that** the data tree structure has the form of a hierarchical data tree structure (52).

12. Process as defined in any one of the preceding claims, **characterized in that** for each virtual operating unit (REV1, REV2, REV3, W) the machining operations realizable therewith are ascertained automatically by the data processing unit.

13. Process as defined in claim 12, **characterized in that** a set of filter data (FS) is generated for ascertaining the realizable machining operation.

14. Process as defined in claim 13, **characterized in that** the set of filter data (FS) is generated on the basis of the machine and control configuration.

15. Process as defined in any one of claims 12 to 14, **characterized in that** the set of filter data (FS) is ascertained independently by the data processing unit (10) in accordance with the machine and control configuration.

16. Process as defined in any one of claims 13 to 15, **characterized in that** a list (54) of machining operations performable with the respective virtual operating unit (REV1, REV2, REV3, W) is selected from a list (53) of all the possible machining operations with the set of filter data (FS).

17. Process as defined in any one of claims 12 to 16, **characterized in that** the list (54) with the machining operations allocated to the respective virtual operating unit (REV1, REV2, REV3, W) is presented so as to be selectable for a user.

18. Process as defined in any one of claims 12 to 17, **characterized in that** the sets of control data (SDS) for the control program (56) are ascertained automatically by the data processing unit (10) on the basis of the addressed, virtual operating unit (REV1, REV2, REV3, W) and the virtual machining operation correspondingly selected.

19. Process as defined in any one of the preceding claims, **characterized in that** the change in shape of a virtual workpiece (42) due to machining thereof by means of virtual actions of the virtual operating units (REV1, REV2, REV3, W) is represented.

20. Process as defined in claim 19, **characterized in that** the change in shape of the virtual workpiece (42) is ascertained by way of a cut calculation (68).

21. Process as defined in any one of the preceding claims, **characterized in that** the sets of control data (SDS) of the control program (56) are decoded and interpolated by the data processing unit (10) in the same way as in a decoder and an interpolator of the machine control (34) for the operating units of the machine tool (32).

22. Process as defined in claim 21, **characterized in that** the virtual actions of the virtual operating units (REV1, REV2, REV3, W) are ascertained and represented for the interpolation using the machine and control configuration.

23. Process as defined in claim 22, **characterized in that** the machine model (52) is used for the interpolation for ascertaining the virtual actions.

24. Process as defined in any one of claims 19 to 23, **characterized in that** the machining of the virtual workpiece (42) is represented at any time on said virtual workpiece.

25. Process as defined in any one of the preceding claims, **characterized in that** the virtual actions of the virtual operating units (REV1, REV2, REV3, W) are visualized in a machining sequence provided for a machining of the virtual workpiece (42) or in a reverse machining sequence.

26. Process as defined in claim 25, **characterized in that** in addition to the sets of control data (SDS) auxiliary data (HDS) allowing a visualization of the virtual actions in a reverse machining sequence are generated for each set of control data (SDS) taking into account the machine tool and control configuration.

27. Process as defined in claim 26, **characterized in that** the auxiliary data are allocated to each set of control data (SDS) in the form of a set of auxiliary data (HDS).

28. Process as defined in claim 27, **characterized in that** the sets of auxiliary data (HDS) are stored in a chained list (58).

29. Process as defined in claim 27 or 28, **characterized in that** the set of auxiliary data (HDS) comprises a set of transition and/or status data.

30. Process as defined in any one of the preceding claims, **characterized in that** shape data of the virtual workpiece (42) are ascertained for each set of control data (SDS).

31. Process as defined in claim 30, **characterized in that** the shape data are stored in the set of auxiliary data (HDS).

32. Process as defined in any one of claims 28 to 31, **characterized in that** not only the control program (56) but also the chained list (58) are accessed and the corresponding set of auxiliary data (HDS) is read from the chained list (58) for each set of control data (SDS).

33. Process as defined in claim 32, **characterized in that** not only the set of control data (SDS) to be processed but also the associated set of auxiliary data (HDS) are determined at the same time by the data processing unit (10).

34. Process as defined in any one of claims 28 to 33, **characterized in that** the chained list (58) is stored and a set of auxiliary data (HDS) is clearly allocated to each set of control data (SDS).

35. Process as defined in any one of claims 26 to 34, **characterized in that** sets of control data (SDS) and auxiliary data (HDS) are recorded with the data processing unit (10) in machining sequence or in reverse machining sequence and represented by the virtual operating units (REV1, REV2, REV3, W) and virtual actions.

36. Programming system for generating a control program (56) for a machine tool (32) serving for the machining of a workpiece (42) by means of operating units (REV1, REV2, REV3, W) of the machine tool (32) controlled by this control program (56), comprising a data input unit (12) for entering and/or changing information determining the control program (56) of the machine tool (32),
a visualization device (14) for representing the information and a data processing unit (10) converting the information into sets of control data (SDS) determining the control program (56) and storing these in a program memory,
wherein the data processing unit (10) comprises a model visualization unit (MVE) designed such that with it at least one virtual operating unit (REV1, REV2, REV3, W) of the machine tool (32) and its virtual actions are representable by means of the visualization device (14), wherein the model visualization unit (MVE) interacts with the data input unit (12) such that the virtual operating units (REV1, REV2, REV3, W) are addressable via the data input unit (12) and virtual actions are specifiable to these virtual operating units,
and wherein with the model visualization unit (MVE) the virtual actions specified to the individual, virtual operating units (REV1, REV2, REV3; W) are convertible into sets of control data (SDS) of the control program (56) allowing collision-free actions taking into account the machine and control configuration.

37. Programming system as defined in claim 36, **characterized in that** with the model visualization unit (MVE) all the virtual operating units (REV1, REV2, REV3, W) of the machine tool (32) are representable on the visualization device (14) in accordance with the actual machine configuration in the form of a machine display (40).

38. Programming system as defined in claim 36 or 37, **characterized in that** the model visualization unit (MVE) represents the virtual operating units (REV1, REV2, REV3, W) and their virtual actions on the visualization device (14) taking into account the machine and control configuration of the machine tool (32).

39. Programming system as defined in any one of claims 36 to 38, **characterized in that** the model visualization unit (MVE) represents the virtual operating units (REV1, REV2, REV3, W) and their virtual actions on the visualization device (14) after they have been addressed and specified.

40. Programming system as defined in any one of claims 36 to 39, **characterized in that** a linkage of virtual operating units (REV1, REV2, REV3, W) specified in a defined manner takes place by means of a model configuration unit (MKE) interacting with the model visualization unit (MVE) in order to take into account the machine and control configuration.

41. Programming system as defined in any one of claims 36 to 40, **characterized in that** the machine and control configuration is taken into account with the aid of a machine model (46) generated by the model visualization unit (MVE), said machine model comprising information concerning linkages of the virtual operating units (REV1, REV2, REV3, W) representing the machine and control configuration.

42. Programming system as defined in claim 41, **characterized in that** the machine model (46) comprises a basic configuration of the virtual operating units (REV1, REV2, REV3, W) of the machine tool (32) extendible by the user.

43. Programming system as defined in claim 41 or 42, **characterized in that** the machine model (46) is generatable by means of linkage information from a model configuration unit (MKE).

44. Programming system as defined in any one of claims 41 to 43, **characterized in that** the data processing unit (10) has a main memory (20) for storage of the machine model (46) linking the individual, virtual operating units (REV1, REV2, REV3, W) of the machine tool (32) in accordance with the machine and control configuration.

45. Programming system as defined in any one of claims 41 to 44, **characterized in that** the machine model (46) is available to the data processing unit (10) in the form of a data tree structure (42).

46. Programming system as defined in claim 45, **characterized in that** the data tree structure has the form of a hierarchical data tree structure (52).

47. Programming system as defined in any one of claims 36 to 46, **characterized in that** a function allocation unit (FZE) is allocated to the model visualization unit (MVE), the machining operation realizable with each virtual operating unit (REV1, REV2, REV3, W) being ascertainable for each operating unit with said function allocation unit.

48. Programming system as defined in claim 47, **characterized in that** a set of filter data (FS) is generatable for ascertaining the realizable machining operation.

49. Programming system as defined in claim 48, **characterized in that** the set of filter data (FS) is generatable on the basis of the machine and control configuration.

50. Programming system as defined in any one of claims 47 to 49, **characterized in that** the model configuration unit (MKE) generates the set of filter data (FS) in accordance with the machine and control configuration and transmits this set of filter data (FS) to the function allocation unit (FZE).

51. Programming system as defined in any one of claims 48 to 50, **characterized in that** with the set of filter data (FS) the function allocation unit (FZE) selects from a list (53) of all possible machining operations a list (54) of machining operations performable with the respective virtual operating units (REV1, REV2, REV3, W).

52. Programming system as defined in any one of claims 47 to 51, **characterized in that** the function allocation unit (FZE) presents the list (54) with the machining operations allocated to the respective virtual operating units (REV1, REV2, REV3, W) via the model visualization unit (MVE) so as to be selectable for a user.

53. Programming system as defined in any one of claims 47 to 52, **characterized in that** the model visualization unit (MVE) automatically ascertains the sets of control data (SDS) for the control program (56) on the basis of the addressed operating unit (REV1, REV2, REV3, W) and the virtual machining operation selected accordingly.

54. Programming system as defined in any one of claims 36 to 53, **characterized in that** the model visualization unit (MVE) represents the change in shape of a virtual workpiece (42) by way of machining thereof by means of virtual actions of the virtual operating units (REV1, REV2, REV3, W).

55. Programming system as defined in claim 54, **characterized in that** the change in shape of the virtual workpiece (42) is ascertainable by way of a cut calculation unit (68).

56. Programming system as defined in any one of claims 36 to 55, **characterized in that** the model visualization unit (MVE) has a decoder (62) and an interpolator (64) for the sets of control data (SDS) of the control program (56) corresponding to a decoder and an interpolator of the machine control (34) for the operating unit of the machine tool (32).

57. Programming system as defined in claim 56, **characterized in that** the interpolator (64) ascertains the virtual actions of the virtual operating units (REV1, REV2, REV3, W) using the machine and control configuration and the model visualization unit represents these on the visualization device (14).

58. Programming system as defined in claim 57, **characterized in that** the interpolator (64) uses the machine model (52) for ascertaining the virtual actions.

59. Programming system as defined in any one of claims 54 to 58, **characterized in that** the model visualization unit (MVE) is designed such that the machining of the virtual workpiece (42) is representable at any time on said virtual workpiece.

60. Programming system as defined in any one of claims 36 to 59, **characterized in that** the virtual actions of the virtual operating units (REV1, REV2, REV3, W) are visualizable in a machining sequence provided for a machining of the virtual workpiece (42) or in a reverse machining sequence.

61. Programming system as defined in claim 60, **characterized in that** the model visualization unit (MVE) is designed such that in addition to the sets of control data (SDS) this generates auxiliary data (HDS) for each set of control data (SDS) taking into account the machine tool and control configuration, said auxiliary data permitting a visualization of the virtual actions in a reverse machining sequence.

62. Programming system as defined in claim 61, **characterized in that** the model visualization unit (MVE) allocates the auxiliary data to each set of control data (SDS) in the form of a set of auxiliary data.

63. Programming system as defined in claim 62, **characterized in that** the model visualization unit (MVE) stores the sets of auxiliary data (HDS) in a chained list (58).

64. Programming system as defined in claim 62 or 63, **characterized in that** the set of auxiliary data (HDS) comprises a set of transition and/or status data.

65. Programming system as defined in any one of claims 36 to 64, **characterized in that** the model visualization unit (MVE) ascertains shape data of the virtual workpiece (42) for each set of control data (SDS).

66. Programming system as defined in claim 65, **characterized in that** the model visualization unit (MVE) stores the shape data in the set of auxiliary data (HDS).

67. Programming system as defined in any one of claims 63 to 66, **characterized in that** the model visualization unit (MVE) is designed such that it accesses not only the control program (56) but also the chained list (58) and the corresponding set of auxiliary data (HDS) is readable from the chained list (58) for each set of control data (SDS).

68. Programming system as defined in claim 67, **characterized in that** the model visualization unit (MVE) determines by means of an indicator unit (60) not only the set of control data (SDS) to be processed but also the associated set of auxiliary data (HDS).

69. Programming system as defined in any one of claims 61 to 68, **characterized in that** the model visualization unit (MVE) is designed such that with it sets of control data (SDS) and auxiliary data (HDS) are recordable in machining sequence or in reverse machining sequence and are representable by way of the virtual operating units (REV1, REV2, REV3, W) and virtual actions.

70. Programming system as defined in any one of claims 36 to 69, **characterized in that** the data processing unit (10) has a system program memory (18) for storing the control program (56).

71. Programming system as defined in claim 70, **characterized in that** the chained list (58) is stored in the system program memory (18) and that a set of auxiliary data (HDS) is clearly allocated to each set of control data (SDS).

## Revendications

1. Procédé d'établissement d'un programme de commande (56) comprenant au moins une suite de jeux de données de commande (SDS) pour une machine-outil (32) en vue de l'usinage d'une pièce (42) sur celle-ci au moyen d'unités fonctionnelles (REV1, REV2, REV3, W) de la machine-outil (32) commandées par ce programme de commande (56), dans lequel une pièce virtuelle (42) et au moins une unité fonctionnelle virtuelle (REV1, REV2, REV3, W) sont représentées pour un utilisateur en vue de l'établissement du programme de commande (56) par un dispositif de traitement des données (10),
les différentes unités fonctionnelles virtuelles (REV1, REV2, REV3, W) étant déclenchées par l'utilisateur, et des actions virtuelles des unités fonctionnelles virtuelles étant spécifiées au moyen d'un dispositif d'entrée des données (12),
et dans lesquelles les actions spécifiées aux différentes unités fonctionnelles virtuelles (REV1, REV2, REV3, W) sont converties, par le dispositif de traitement des données (10) selon une configuration de machine et de commande spécifiée au dispositif de traitement des données, automatiquement en jeux de données de commande (SDS) permettant des actions sans collision du programme de commande (56).

2. Procédé selon la revendication 1, **caractérisé en ce que** pour l'utilisateur toutes les unités fonctionnelles virtuelles (REV1, REV2, REV3, W) de la machine-outil (32) selon la configuration de machine actuelle sont représentées sous la forme d'une image de machine (40).

3. Procédé selon la revendication 2, **caractérisé en ce que** toutes les unités fonctionnelles virtuelles (REV1, REV2, REV3, W) et leurs actions virtuelles sont représentées en tenant compte de la configuration de machine et de commande de la machine-outil (32).

4. Procédé selon une des revendications précédentes, **caractérisé en ce que** pour l'utilisateur les unités fonctionnelles virtuelles (REV1, REV2, REV3, W) et leurs actions virtuelles sont représentées après avoir été déclenchées et spécifiées.

5. Procédé selon une des revendications précédentes, **caractérisé en ce qu'**une liaison des unités fonctionnelles virtuelles (REV1, REV2, REV3, W) spécifiées précisément en vue de la prise en compte de la configuration de machine et de commande est réalisée automatiquement par le dispositif de traitement des données (10).

6. Procédé selon une des revendications précédentes, **caractérisé en ce que** la prise en compte de la configuration de machine et de commande est réalisée au moyen d'un modèle de machine (46) qui comprend des informations sur les liaisons représentant la configuration de machine et de commande des unités fonctionnelles virtuelles (REV1, REV2, REV3, W).

7. Procédé selon la revendication 6, **caractérisé en ce que** le modèle de machine (46) comprend une configuration de base des unités fonctionnelles virtuelles (REV1, REV2, REV3, W) de la machine-outil (32) qui est extensible par l'utilisateur.

8. Procédé selon la revendication 6 ou 7, **caractérisé en ce que** le modèle de machine (46) est établi au moyen d'informations de liaison enregistrées.

9. Procédé selon une des revendications 6 à 8, **caractérisé en ce que** le modèle de machine (46) est enregistré dans le dispositif de traitement des données (10), le modèle de machine (46) reliant les différentes unités fonctionnelles virtuelles (REV1, REV2, REV3, W) de la machine-outil (32) selon la configuration de machine et de commande.

10. Procédé selon une des revendications 6 à 9, **caractérisé en ce que** le modèle de machine (46) est mis en oeuvre dans le dispositif de traitement des données (10) sous la forme d'une structure arborescente de données (42).

11. Procédé selon la revendication 9, **caractérisé en ce que** la structure arborescente de données a la forme d'une structure arborescente hiérarchique (52).

12. Procédé selon une des revendications précédentes, **caractérisé en ce que**, du dispositif de traitement des données à chaque unité fonctionnelle virtuelle (REV1, REV2, REV3, W), les fonctions d'usinage réalisables avec celle-ci sont déterminées automatiquement.

13. Procédé selon la revendication 12, **caractérisé en ce qu'**un jeu de données de filtres (FS) est établi pour la détermination de la fonction d'usinage réalisable.

14. Procédé selon la revendication 13, **caractérisé en ce que** le jeu de données de filtres (FS) est établi sur la base de la configuration de machine et de commande.

15. Procédé selon une des revendications 12 à 14, **caractérisé en ce que** le jeu de données de filtres (FS) est déterminé de façon autonome par le dispositif de traitement des données (10) selon la configuration de machine et de commande.

16. Procédé selon une des revendications 13 à 15, **caractérisé en ce qu'**une liste (54) de fonctions d'usinage réalisables avec chaque unité fonctionnelle virtuelle (REV1, REV2, REV3, W) est sélectionnée avec le jeu de données de filtres (FS) à partir d'une liste (53) de toutes les fonctions d'usinage possibles.

17. Procédé selon une des revendications 12 à 16, **caractérisé en ce que** la liste (54) est présentée, en offrant différents choix, à un utilisateur avec les fonctions d'usinage attribuées à chaque unité fonctionnelle virtuelle (REV1, REV2, REV3, W).

18. Procédé selon une des revendications 12 à 17, **caractérisé en ce que** les jeux de données de commande (SDS) pour le programme de commande (56) sont déterminés automatiquement par le dispositif de traitement des données (10) sur la base de l'unité fonctionnelle virtuelle (REV1, REV2, REV3, W) déclenchée et de la fonction d'usinage virtuelle sélectionnée correspondante.

19. Procédé selon une des revendications précédentes, **caractérisé en ce que** le changement de forme d'une pièce virtuelle (42) par l'usinage de celle-ci est représenté au moyen des actions virtuelles des unités fonctionnelles virtuelles (REV1, REV2, REV3, W).

20. Procédé selon la revendication 19, **caractérisé en ce que** le changement de forme de la pièce virtuelle (42) est déterminé par un calcul de coupe (68).

21. Procédé selon une des revendications précédentes, **caractérisé en ce que** les jeux de données de commande (SDS) du programme de commande (56) sont décodés et interpolés par le dispositif de traitement des données (10), de la même manière que dans un décodeur et un interpolateur de la commande machine (34) pour les unités fonctionnelles de la machine-outil (32).

22. Procédé selon la revendication 21, **caractérisé en ce que** les actions virtuelles des unités fonctionnelles virtuelles (REV1, REV2, REV3, W) sont déterminées et représentées lors de l'interpolation à l'aide de la configuration de machine et de commande.

23. Procédé selon la revendication 22, **caractérisé en ce que** le modèle de machine (52) est considéré lors de l'interpolation à des fins de détermination des actions virtuelles.

24. Procédé selon une des revendications 19 à 23, **caractérisé en ce que**, au niveau de la pièce virtuelle (42), l'usinage de cette même pièce est représenté à chaque moment.

25. Procédé selon une des revendications précédentes, **caractérisé en ce que** les actions virtuelles des unités fonctionnelles virtuelles (REV1, REV2, REV3, W) sont visualisées dans une séquence d'usinage prévue pour un usinage de la pièce virtuelle (42), ou dans une séquence d'usinage inversée.

26. Procédé selon la revendication 25, **caractérisé en ce que**, en complément des jeux de données de commande (SDS), en tenant compte de la configuration de machine-outil et de commande, des données auxiliaires (HDS) sont produites pour chaque jeu de données de commande (SDS), lesquelles permettent une visualisation des actions virtuelles dans une séquence d'usinage inversée.

27. Procédé selon la revendication 26, **caractérisé en ce que** les données auxiliaires sont affectées sous la forme d'un jeu de données auxiliaires (HDS) à chaque jeu de données de commande (SDS).

28. Procédé selon la revendication 27, **caractérisé en ce que** les jeux de données auxiliaires (HDS) sont enregistrés dans une liste associée (58).

29. Procédé selon la revendication 27 ou 28, **caractérisé en ce que** le jeu de données auxiliaires (HDS) comprend un jeu de données de transition et/ou d'état.

30. Procédé selon une des revendications précédentes, **caractérisé en ce que** des données de forme de la pièce virtuelle (42) sont déterminées pour chaque jeu de données de commande (SDS).

31. Procédé selon la revendication 30, **caractérisé en ce que** les données de forme sont déposées dans le jeu de données auxiliaires (HDS).

32. Procédé selon une des revendications 28 à 31, **caractérisé en ce qu'**un accès au programme de commande (56) et à la liste associée (58) est possible, et le jeu de données auxiliaires (HDS) correspondant à chaque jeu de données de commande (SDS) est extrait de la liste associée (58).

33. Procédé selon la revendication 32, **caractérisé en ce que** non seulement le jeu de données de commande (SDS) à prendre en charge, mais aussi le jeu de données auxiliaires (HDS) attribué sont déterminés simultanément par le dispositif de traitement des données (10).

34. Procédé selon une des revendications 28 à 33, **caractérisé en ce que** la liste associée (58) est enregistrée, et un jeu de données auxiliaires (HDS) est affecté univoquement à chaque jeu de données de commande (SDS).

35. Procédé selon une des revendications 26 à 34, **caractérisé en ce que** des jeux de données de commande (SDS) et des données auxiliaires (HDS) sont saisies avec le dispositif de traitement des données (10) dans une séquence d'usinage ou dans une séquence d'usinage inversée, et sont représentés par les unités fonctionnelles virtuelles (REV1, REV2, REV3, W) et les actions virtuelles.

36. Système de programmation pour la production d'un programme de commande (56) pour une machine-outil (32), lequel est destiné à l'usinage d'une pièce (42) au moyen d'unités fonctionnelles (REV1, REV2, REV3, W) de la machine-outil (32) commandées par ce programme de commande (56), comprenant un dispositif d'entrée des données (12) pour l'entrée et/ou la modification d'informations déterminant le programme de commande (56) de la machine-outil (32),
un appareil de visualisation (14) pour la représentation des informations et un dispositif de traitement des données (10) qui convertit les informations en jeux de données de commande (SDS) déterminant le programme de commande (56) et les enregistre dans une mémoire de programme,
sachant que le dispositif de traitement des données (10) comprend une unité de visualisation du modèle (MVE) qui est configurée de telle manière qu'au moins une unité fonctionnelle virtuelle (REV1, REV2, REV3, W) de la machine-outil (32) et leurs actions virtuelles peuvent être représentées au moyen de l'appareil de visualisation (14), sachant que l'unité de visualisation du modèle (MVE) coopère avec le dispositif d'entrée de données (12), de telle sorte que les unités fonctionnelles virtuelles (REV1, REV2, REV3, W) peuvent être déclenchées via le dispositif d'entrée de données (12), et des actions virtuelles peuvent être spécifiées à ces unités fonctionnelles virtuelles, et sachant que les actions virtuelles spécifiées aux différentes unités fonctionnelles virtuelles (REV1, REV2, REV3, W) peuvent être converties avec l'unité de visualisation du modèle (MVE) selon la configuration de machine et de commande en jeux de données de commande (SDS) permettant des actions sans collision du programme de commande (56).

37. Système de programmation selon la revendication 36, **caractérisé en ce que** toutes les unités fonctionnelles virtuelles (RFV1, REV2, REV3, W) de la machine-outil (32) peuvent être représentées selon la configuration de machine actuelle grâce à l'unité de visualisation du modèle (MVE) sous la forme d'une image de machine (40) sur l'appareil de visualisation (14).

38. Système de programmation selon la revendication 36 ou 37, **caractérisé en ce que** l'unité de visualisation du modèle (MVE) représente les unités fonctionnelles virtuelles (REV1, REV2, REV3, W) et leurs actions virtuelles selon la configuration de machine et de commande de la machine-outil (32) sur l'appareil de visualisation (14).

39. Système de programmation selon une des revendications 36 à 38, **caractérisé en ce que** l'unité de visualisation du modèle (MVE) représente les unités fonctionnelles virtuelles (REV1, REV2, REV3, W) et leurs actions virtuelles après le déclenchement et la spécification de celles-ci sur l'appareil de visualisation (14).

40. Système de programmation selon une des revendications 36 à 39, **caractérisé en ce que** pour tenir compte de la configuration de machine et de commande une liaison des unités fonctionnelles virtuelles (REV1, REV2, REV3, W) spécifiées précisément est réalisée au moyen d'une unité de configuration du modèle (MKE) coopérant avec l'unité de visualisation du modèle (MVE).

41. Système de programmation selon une des revendications 36 à 40, **caractérisé en ce que** la prise en compte de la configuration de machine et de commande a lieu au moyen d'un modèle de machine (46) établi par l'unité de visualisation du modèle (MVE), lequel comprend des informations sur les liaisons représentant la configuration de machine et de commande des unités fonctionnelles virtuelles (REV1, REV2, REV3, W).

42. Système de programmation selon la revendication 41, **caractérisé en ce que** le modèle de machine (46) comprend une configuration de base des unités fonctionnelles virtuelles (REV1, REV2, REV3, W) de la machine-outil (32), laquelle est extensible par l'utilisateur.

43. Système de programmation selon la revendication 41 ou 42, **caractérisé en ce que** le modèle de machine (46) peut être établi au moyen d'informations de liaisons provenant d'une unité de configuration du modèle (MKE).

44. Système de programmation selon une des revendications 41 à 43, **caractérisé en ce que** le dispositif de traitement des données (10) comporte une mémoire de travail (20) dans laquelle est enregistré le modèle de machine (46) qui relie les différentes unités fonctionnelles virtuelles (REV1, REV2, REV3, W) de la machine-outil (32) selon la configuration de machine et de commande.

45. Système de programmation selon une des revendications 41 à 44, **caractérisé en ce que** le modèle de machine (46) est présent dans le dispositif de traitement des données (10) sous la forme d'une structure arborescente de données (42).

46. Système de programmation selon la revendication 45, **caractérisé en ce que** la structure arborescente de données a la forme d'une structure arborescente hiérarchique (52).

47. Système de programmation selon une des revendications 36 à 46, **caractérisé en ce que** l'unité de visualisation du modèle (MVE) est associée à une unité d'attribution de fonction (FZE) avec laquelle peuvent être déterminées les fonctions d'usinage réalisables avec celle-ci pour chaque unité fonctionnelle virtuelle (REV1, REV2, REV3, W).

48. Système de programmation selon la revendication 47, **caractérisé en ce qu'**un jeu de données de filtres (FS) peut être établi pour déterminer la fonction d'usinage réalisable.

49. Système de programmation selon la revendication 48, **caractérisé en ce que** le jeu de données de filtres (FS) peut être établi sur la base de la configuration de machine et de commande.

50. Système de programmation selon une des revendications 47 à 49, **caractérisé en ce que** l'unité de configuration du modèle (MKE) produit le jeu de données de filtres (FS) selon la configuration de machine et de commande, et transmet ce jeu de données de filtres (FS) à l'unité d'attribution de fonction (FZE).

51. Système de programmation selon une des revendications 48 à 50, **caractérisé en ce que** l'unité d'attribution de fonction (FZE) avec le jeu de données de filtres (FS) sélectionne, dans une liste (53) mentionnant toutes les fonctions d'usinage possibles, une liste (54) de fonctions d'usinage réalisables avec les unités fonctionnelles virtuelles respectives (REV1, REV2, REV3, W).

52. Système de programmation selon une des revendications 47 à 51, **caractérisé en ce que** l'unité d'attribution de fonction (FZE) présente à un utilisateur, en offrant différents choix, la liste (54) avec les fonctions d'usinage attribuées aux unités fonctionnelles virtuelles respectives (REV1, REV2, REV3, W), via l'unité de visualisation du modèle (MVE).

53. Système de programmation selon une des revendications 47 à 52, **caractérisé en ce que** l'unité de visualisation du modèle (MVE) détermine automatiquement les jeux de données de commande (SDS) pour le programme de commande (56) sur la base de l'unité fonctionnelle (REV1, REV2, REV3, W) déclenchée et de la fonction d'usinage virtuelle sélectionnée en correspondante.

54. Système de programmation selon une des revendications 36 à 53, **caractérisé en ce que** l'unité de visualisation du modèle (MVE) représente le changement de forme d'une pièce virtuelle (42) par l'usinage de celle-ci au moyen des actions virtuelles des unités fonctionnelles virtuelles (REV1, REV2, REV3, W).

55. Système de programmation selon la revendication 54, **caractérisé en ce que** le changement de forme de la pièce virtuelle (42) peut être déterminé par une unité de calcul de coupe (68).

56. Système de programmation selon une des revendications 36 à 55, **caractérisé en ce que** l'unité de visualisation du modèle (MVE) comprend un décodeur (62) et un interpolateur (64) pour les jeux de données de commande (SDS) du programme de commande (56), lesquels correspondent à un décodeur et à un interpolateur de la commande (34) de machine pour l'unité fonctionnelle de la machine-outil (32).

57. Système de programmation selon la revendication 56, **caractérisé en ce que** l'interpolateur (64) détermine les actions virtuelles des unités fonctionnelles virtuelles (REV1, REV2, REV3, W) à l'aide de la configuration de machine et de commande, et l'unité de visualisation du modèle représente celles-ci sur l'appareil de visualisation (14).

58. Système de programmation selon la revendication 57, **caractérisé en ce que** l'interpolateur (64) a recours au modèle de machine (52) pour la détermination des actions virtuelles.

59. Système de programmation selon une des revendications 54 à 58, **caractérisé en ce que** l'unité de visualisation du modèle (MVE) est configurée de telle manière qu'au niveau de la pièce virtuelle (42), l'usinage de cette même pièce est représenté à chaque moment.

60. Système de programmation selon une des revendications 36 à 59, **caractérisé en ce que** les actions virtuelles des unités fonctionnelles virtuelles (REV1, REV2, REV3, W) peuvent être visualisées dans une séquence d'usinage prévue pour un usinage de la pièce virtuelle (42) ou dans une séquence d'usinage inversée.

61. Système de programmation selon la revendication 60, **caractérisé en ce que** l'unité de visualisation du modèle (MVE) est configurée de telle manière que, en complément des jeux de données de commande (SDS), celle-ci produit, en tenant compte de la configuration de machine-outil et de commande, des données auxiliaires (HDS) pour chaque jeu de données de commande (SDS), lesquelles permettent une visualisation des actions virtuelles dans une séquence d'usinage inversée.

62. Système de programmation selon la revendication 61, **caractérisé en ce que** l'unité de visualisation du modèle (MVE) attribue à chaque jeu de données de commande (SDS) les données auxiliaires sous la forme d'un jeu de données auxiliaires.

63. Système de programmation selon la revendication 62, **caractérisé en ce que** l'unité de visualisation du modèle (MVE) enregistre les jeux de données auxiliaires (HDS) dans une liste associée (58).

64. Système de programmation selon la revendication 62 ou 63, **caractérisé en ce que** le jeu de données auxiliaires (HDS) comprend un jeu de données de transition et/ou d'état.

65. Système de programmation selon une des revendications 36 à 64, **caractérisé en ce que** l'unité de visualisation du modèle (MVE) affectée à chaque jeu de données de commande (SDS) détermine des données de forme de la pièce virtuelle (42).

66. Système de programmation selon la revendication 65, **caractérisé en ce que** l'unité de visualisation du modèle (MVE) dépose les données de forme dans le jeu de données auxiliaires (HDS).

67. Système de programmation selon l'une des revendications 63 à 66, **caractérisé en ce que** l'unité de visualisation du modèle (MVE) est configurée de telle manière qu'elle accède non seulement au programme de commande (56), mais aussi à la liste associée (58), et le jeu de données auxiliaires (HDS) correspondant à chaque jeu de données de commande (SDS) est extrait de la liste associée (58).

68. Système de programmation selon la revendication 67, **caractérisé en ce que** l'unité de visualisation du modèle (MVE) détermine au moyen d'une unité à aiguille (60) non seulement le jeu de données de commande (SDS) à prendre en charge, mais aussi le jeu de données auxiliaires (HDS) attribué.

69. Système de programmation selon une des revendications 61 à 68, **caractérisé en ce que** l'unité de visualisation du modèle (MVE) est configurée de telle manière que des jeux de données de commande (SDS) et des données auxiliaires (HDS) peuvent être saisis avec celle-ci dans une séquence d'usinage ou dans une séquence d'usinage inversée, et peuvent être représentés par les unités fonctionnelles virtuelles (REV1, REV2, REV3, W) et les actions virtuelles.

70. Système de programmation selon une des revendications 36 à 69, **caractérisé en ce que** le dispositif de traitement des données (10) comprend une mémoire programme du système (18) dans laquelle est enregistré le programme de commande (56).

71. Système de programmation selon la revendication 70, **caractérisé en ce que** la liste associée (58) est enregistrée dans la mémoire programme du système (18), et **en ce qu'**un jeu de données auxiliaires (HDS) est attribué univoquement à chaque jeu de données de commande (SDS).
